# EUROPEAN PATENT APPLICATION

(11) **EP 4 803 190 A1**
(43) Date of publication of application: **09.09.2026**
(21) Application number: 24885890.4
(22) Date of filing: 01.11.2024
(51) Int. Cl.: B01J 20/22, B01J 20/34, C08L 71/02, C08L 79/02

(54) **COMPOSITION FOR CARBON DIOXIDE SEPARATION, SOLID ABSORBENT MATERIAL FOR CARBON DIOXIDE SEPARATION USING SAME, AND METHOD FOR PRODUCING SOLID ABSORBENT MATERIAL FOR CARBON DIOXIDE SEPARATION**

(30) Priority: 02.11.2023 JP 2023188170
(71) Applicant: Nippon Shokubai Co., Ltd., Osaka-shi, Osaka 541-0043 (JP)
(72) Inventor: KAWAMOTO, Takahiro, Himeji-shi, Hyogo 671-1282 (JP)
(74) Representative: Crow, Martin
(86) International application number: PCT/JP2024/039154
(87) International publication number: WO 2025/095126

(57) **Abstract**

[Object] Provided is a means by which carbon dioxide can be efficiently separated or recovered from a gas composition containing low-partial-pressure and/or low-concentration carbon dioxide.

[Solution] A composition for carbon dioxide separation containing an oligoamine compound having a boiling point of 200°C or higher; and a modifier having a boiling point of 200°C or higher, wherein some of all nitrogen atoms of the oligoamine compound have a structure of carbamic acid or a salt thereof, and a proportion of nitrogen atoms forming the structure of carbamic acid or a salt thereof in the oligoamine compound is from 0.1% to 20% relative to all the nitrogen atoms of the oligoamine compound.

## Description

### Technical Field

The present invention relates to a composition for carbon dioxide separation, a solid absorbent for carbon dioxide separation containing the composition for carbon dioxide separation, and a method for producing a solid absorbent for carbon dioxide separation.

### Background Art

In recent years, various carbon dioxide separation and recovery techniques have been developed for the purpose of realizing carbon neutrality. Typical carbon dioxide separation and recovery techniques include chemical absorption methods, physical absorption methods, and membrane separation methods (Patent Literatures 1 and 2, and Non-Patent Literature 1).

The chemical absorption method is a technique for separating carbon dioxide using a chemical reaction between carbon dioxide and a medium such as an amine compound that binds to carbon dioxide, and a large amount of energy is required for absorption and release of carbon dioxide. Meanwhile, the chemical absorption method is an indispensable technique for recovery of carbon dioxide from a gas containing low-partial-pressure or low-concentration carbon dioxide as typified by recovery of carbon dioxide from the atmosphere (Non-Patent Literature 2).

The chemical absorption method includes an absorbent system and a solid absorbent system, and in the case of carbon dioxide recovery from a gas containing low-partial-pressure or low-concentration carbon dioxide, a solid absorbent system having a small pressure loss is promising because a large amount of gas needs to be brought into contact with an absorption component. In the solid absorbent system, to absorb or adsorb carbon dioxide, a solid absorbent in which an absorption component is immobilized or supported on a porous material is used (Non-Patent Literature 3).

For example, Non-Patent Literature 4 reports that, to recover carbon dioxide from a gas containing low-partial-pressure or low-concentration carbon dioxide such as the atmosphere, a system in which ordered mesoporous silica represented by SBA-15 is used as a porous material and polyethyleneimine and polyethylene glycol are blended as an absorption component is effective.

### Citation List

### Patent Literature

Patent Literature 1: WO 2019/040445
Patent Literature 2: WO 2017/146231

### Non-Patent Literature

Non-Patent Literature 1: Tomoki Kamiya et al, "CO2 Separation from Air by Nanoparticle-Supported Liquid Membranes of Amine and Ionic Liquid Mixtures", JOURNAL OF CHEMICAL ENGINEERING OF JAPAN, Vol. 49 (7), p. 607-613,2016, The Society of Chemical Engineers, Japan
Non-Patent Literature 2: M. M. Faruque Hasan et al, "Modeling, Simulation, and Optimization of Postcombustion CO2 Capture for Variable Feed Concentration and Flow Rate. 2.Pressure Swing Adsorption and Vacuum Swing Adsorption Processes", Industrial & Engineering Chemistry Research 2012, Vol. 51, p. 15665-15682
Non-Patent Literature 3: Dr. Xinhua Shen et al, "Polyethylenimine Applications in Carbon Dioxide Capture and Separation: From Theoretical Study to Experimental Work", ENERGY TECHNOLOGY 2017, Vol. 5, p. 822-833
Non-Patent Literature 4: Miles A Sakwa-Novak et al, "Role of Additives in Composite PEI/Oxide CO2 Adsorbents: Enhancement in the Amine Efficiency of Supported PEI by PEG in CO2 Capture from Simulated Ambient Air", APPLIED MATERIALS & INTERFACES, 2015, Vol. 7, p. 24748-24759

### Summary of Invention

However, the spread and commercialization of the solid absorbent using the ordered mesoporous silica has two major problems of (1) availability of the porous material and (2) absorption-desorption performance. Each of the problems will be described below.

(1) Problem related to availability of porous material: An ordered mesoporous silica represented by SBA-15 is characterized by having a structure in which pores with uniform sizes in a mesoscopic size are regularly arranged and having a large surface area, but it requires a complicated production process to precisely control the pore structure. For example, according to Non-Patent Literature 4, SBA-15 is synthesized by using a surfactant such as Pluronic (trade name) P123 as a template compound, adding a silica raw material such as tetraalkoxysilane to form an ordered liquid crystal layer such as a hexagonal structure in which rod-shaped micelles are assembled, and calcining the resulting organic-inorganic composite material.

The ordered mesoporous silica requiring such a complicated production process is poor in availability as a porous material and is costly. Thus, it has been required to develop a solid absorbent utilizing a highly versatile porous material for social implementation and large-scale spread of a solid absorbent system corresponding to a gas containing low-partial-pressure or low-concentration carbon dioxide.

(2) Problem related to absorption-desorption performance: In a solid absorbent using ordered mesoporous silica as a porous material, it is important that carbon dioxide diffuses into pores of a penetration structure in which an absorption component is retained. According to Non-Patent Literature 4, a research group of Georgia Institute of Technology has reported that addition of polyethylene glycol to polyethyleneimine used as an absorption component facilitates diffusion of carbon dioxide in pores, and enables achievement of excellent performance in which the carbon dioxide absorption-desorption amount per 1 mole of amine (hereinafter, also referred to as "amine efficiency") exceeds 0.2 mmol-CO₂/mmol-N.

However, even in the excellent solid absorbent disclosed in Non-Patent Literature 4, the carbon dioxide absorption-desorption amount obtained from 400 ppm of a carbon dioxide-containing gas assumed to be the atmosphere does not reach 0.8 mmol/g per 1 g of the solid absorbent, and the carbon dioxide recovery amount in one cycle is 35 g per 1 kg of the solid absorbent in a theoretical value, which is low efficiency, and there is a large deviation from a practical performance level in a solid absorbent system for a gas containing low-partial-pressure or low-concentration carbon dioxide.

As described above, a solid absorbent capable of efficiently recovering carbon dioxide from a gas containing low-partial-pressure or low-concentration carbon dioxide by simultaneously solving (1) the problem related to availability of a porous material and (2) the problem related to absorption-desorption performance has not yet been developed. Thus, there has been a demand for development of a solid absorbent capable of achieving both the amine efficiency and the carbon dioxide recovery amount per unit weight at a high level to achieve social implementation and large-scale spread of a solid absorbent system corresponding to a gas containing low-partial-pressure or low-concentration carbon dioxide.

Therefore, an object of the present invention is to provide a means by which carbon dioxide can be efficiently separated or recovered from a gas composition containing low-partial-pressure and/or low-concentration carbon dioxide.

The present inventor has conducted intensive studies on a method for solving the above problems. As a result, the present inventor has found that the above-described object can be achieved by a composition for carbon dioxide separation containing an oligoamine compound having a boiling point of 200°C or higher and a modifier having a boiling point of 200°C or higher, in which some of all nitrogen atoms of the oligoamine compound have a structure of carbamic acid or a salt thereof, and has completed the present invention.

### Description of Embodiments

Hereinafter, embodiments of the present invention will be described in detail. The embodiments described herein are examples for embodying the technical concept of the present invention, and do not limit the present invention. Thus, other embodiments, methods of use, and operational techniques that may be implemented by those skilled in the art without departing from the spirit of the present invention are included within the scope of the present invention, as defined by the claims and the scope of equivalents thereof. The embodiments described herein can be combined in any way to constitute another embodiment. Unless otherwise specified, operations and measurements of physical properties and the like are performed under conditions of room temperature (from 20 to 25°C)/relative humidity of from 45 to 55%RH.

In the present specification, "from X to Y" indicating a range means "X or more and Y or less". In the present specification, the term "and/or" is used as a meaning including at least one of components listed before and after the term. For example, "A and/or B" encompasses only A, only B, and a combination of A and B. In the present specification, the expression "acid (salt)" means "acid and/or a salt thereof". As used herein, "weight" and "mass", "wt.%" and "mass%", and "parts by weight" and "parts by mass" are treated as synonyms.

### Examples of the Present Invention

The present invention includes the following aspects and forms.

[1] A composition for carbon dioxide separation containing an oligoamine compound having a boiling point of 200°C or higher, and a modifier having a boiling point of 200°C or higher, wherein some of all nitrogen atoms of the oligoamine compound have a structure of carbamic acid or a salt thereof, and a proportion of nitrogen atoms forming the structure of carbamic acid or a salt thereof in the oligoamine compound is from 0.1% to 20% relative to all the nitrogen atoms of the oligoamine compound;
[2] The composition for carbon dioxide separation according to [1], wherein a content of water is from 1 wt.% to 30 wt.% relative to a total weight of the composition for carbon dioxide separation;
[3] The composition for carbon dioxide separation according to [1] or [2], wherein the oligoamine compound is a polyethyleneimine having a number average molecular weight of 200 or more and less than 2000;
[4] The composition for carbon dioxide separation according to any of [1] to [3], wherein the oligoamine compound is a compound in which a content of a primary amine structure is 5% or more in all amine structures;
[5] The composition for carbon dioxide separation according to any of [1] to [4], wherein the modifier has an HSP value of ΔD of 12 or more and 22 or less, ΔP of 5 or more and 15 or less, and ΔH of 3 or more and 30 or less;
[6] The composition for carbon dioxide separation according to any of [1] to [5], wherein the modifier is a compound having a polyethylene glycol structure;
[7] A solid absorbent for carbon dioxide separation, including the composition for carbon dioxide separation described in any of [1] to [6] supported on a hydrophilic silica gel;
[8] The solid absorbent for carbon dioxide separation according to [7], wherein physical properties of the hydrophilic silica gel satisfy one or more selected from the group consisting of (i) to (iv) described below:
   (i) a pore volume of from 0.6 cm³/g to 3.0 cm³/g;
   (ii) an average pore size of from 5 nm to 80 nm;
   (iii) a specific surface area of from 70 m²/g to 800 m²/g; and
   (iv) a bulk specific gravity of 0.10 g/cm³ or more;
[9] The solid absorbent for carbon dioxide separation according to [7] or [8], wherein the solid absorbent satisfies one or more selected from the group consisting of (i) and (ii) described below:
   (i) in a carbon dioxide absorption-desorption test using air having a carbon dioxide concentration of from 300 vol. ppm to 500 vol. ppm and an absolute humidity of 2 g/kg or less, in a step of releasing, at 70°C, carbon dioxide absorbed by the solid absorbent at 40°C, a carbon dioxide absorption-desorption amount per 1 g of the solid absorbent is 0.90 mmol or more, and a carbon dioxide absorption-desorption amount per 1 mol of amine contained in the solid absorbent is 0.20 mol or more; and
   (ii) in a carbon dioxide absorption-desorption test using air having a carbon dioxide concentration of from 9000 vol. ppm to 11000 vol. ppm and an absolute humidity of 2 g/kg or less, in a step of releasing, at 100°C, carbon dioxide absorbed by the solid absorbent at 70°C, a carbon dioxide absorption-desorption amount per 1 g of the solid absorbent is 1.30 mmol or more, and a carbon dioxide absorption-desorption amount per 1 mol of amine contained in the solid absorbent is 0.20 mol or more;
[10] A method for producing a solid absorbent for carbon dioxide separation, the method including:
   (1) a first step of preparing an impregnation liquid containing an oligoamine compound having a boiling point of 200°C or higher, a modifier having a boiling point of 200°C or higher, and water;
   (2) a second step of impregnating a hydrophilic silica gel with the impregnation liquid;
   (3) a third step of separating the hydrophilic silica gel impregnated with the impregnation liquid from an excessive amount of the impregnation liquid; and
   (4) a fourth step of drying the hydrophilic silica gel impregnated with the impregnation liquid by evaporating water in an atmosphere containing carbon dioxide;
[11] The method for producing a solid absorbent for carbon dioxide separation according to [10], wherein the method satisfies one or more selected from the group consisting of (a) to (c) described below:
   (a) the second step is performed in a temperature range of from 20°C to 90°C;
   (b) the second step includes a step of performing degassing in pores of a porous material under a reduced pressure from -0.08 MPaG to -0.004 MPaG; and
   (c) the fourth step is performed in a temperature range of from 30°C to 100°C using air as an atmosphere containing carbon dioxide.

According to the composition for carbon dioxide separation, carbon dioxide can be efficiently separated or recovered from a gas composition containing low-partial-pressure and/or low-concentration carbon dioxide when the composition is supported on a carrier of a porous material or the like (in particular, hydrophilic silica gel) (i.e., when a solid absorbent is formed). More specifically, according to the composition for carbon dioxide separation, it becomes easy to form an absorption site excellent in absorption and desorption of carbon dioxide in micropores and mesopores of a hydrophilic silica gel. Thus, when the composition for carbon dioxide separation is supported on a carrier such as a porous material (i.e., when a solid absorbent is formed), the solid absorbent can efficiently absorb and desorb carbon dioxide from a gas composition containing low-partial-pressure and/or low-concentration carbon dioxide. That is, the composition for carbon dioxide separation according to the present embodiment can be suitably supported on a hydrophilic silica gel, and can be a composition for carbon dioxide separation to be supported by a hydrophilic silica gel.

Furthermore, since the solid absorbent achieves both the carbon dioxide absorption-desorption amount per 1 gram of the solid absorbent and the carbon dioxide absorption-desorption amount per 1 mole of amine (amine efficiency) at a high level, it is possible to provide a technique for efficiently separating or recovering carbon dioxide from a gas composition containing low-partial-pressure and/or low-concentration carbon dioxide.

According to the method for producing a solid absorbent, it becomes easy to allow the composition for carbon dioxide separation to permeate into micropores and mesopores of the hydrophilic silica gel and concentrate the composition while keeping the composition in the micropores and mesopores of the hydrophilic silica gel. This makes it possible to produce a solid absorbent having an absorption site excellent in absorption and desorption of carbon dioxide, and to provide a solid absorbent capable of efficiently absorbing and desorbing carbon dioxide from a gas composition containing low-partial-pressure and/or low-concentration carbon dioxide.

To complete the composition for carbon dioxide separation according to the present embodiment, the present inventor has made intensive studies as follows. Firstly, a carrier for supporting the composition for carbon dioxide separation has been examined. The present inventor has focused on a silica gel as a generally available porous material. A silica gel synthesized by a gel method using sodium silicate and mineral acid as raw materials is highly available and inexpensive. In addition, a silica gel has large macropores connected to micropores and mesopores in the structure. Thus, the inventor has conceived that diffusion of carbon dioxide in the pores can be accelerated to prepare a high-performance solid absorbent when the absorption component can be effectively supported on the micropores and mesopores.

However, a general-purpose silica gel has a complicatedly entangled network pore structure. Thus, it is not easy for an amine component to permeate into the silica gel to be supported on the structure by impregnation, and it has been difficult to apply the general-purpose silica gel as a porous material constituting the solid absorbent (Non-Patent Literature 3: ENERGY TECHNOLOGY 2017, 5, p. 822-833).

As a result of intensive studies, the present inventor has determined that the cause of difficulty of application of a silica gel as a porous material of a solid absorbent is the composition for carbon dioxide separation. It is known that ordered mesoporous silica employed as a porous material in the related art has a hydrophobic property on the inner surface of pores (Non-Patent Literature 5: David P. Serrano et al, "Adsorption and Hydrophobic Properties of Mesostructured MCM-41 and SBA-15 Materials for Volatile Organic Compound Removal", Industrial & Engineering Chemistry Research 2004, Vol. 43, p. 7010-7018), and an organic solvent such as methanol or ethanol has been used as a diluent solvent for supporting an absorption component (Non-Patent Literature 4: Miles A. Sakwa-Novak et al, "Role of Additives in Composite PEI/Oxide CO2 Adsorbents: Enhancement in the Amine Efficiency of Supported PEI by PEG in CO2 Capture from Simulated Ambient Air", APPLIED MATERIALS & INTERFACES, 2015, Vol. 7, p. 24748-24759).

Meanwhile, the inner surface of the pores of the silica gel is a hydrophilic surface rich in silanol groups, and it has been difficult in the composition for carbon dioxide separation blended for ordered mesoporous silica to allow the absorption component to permeate to be retained in the micropores and mesopores of the silica gel.

Thus, the present inventor has invented a composition for carbon dioxide separation having a property suitable for the hydrophilic inner surface of the pores of the silica gel, thereby making it possible to effectively support the absorption component on the micropores and mesopores of the silica gel.

Specifically, the inventor has found that by using a composition containing an oligoamine compound having a specific amount of a carbamic acid (salt) structure and a modifier, an absorption component can be effectively made to permeate to be retained in micropores and mesopores inside a hydrophilic silica gel, whereby the present invention has been completed.

Thus, an object of the present invention is to provide a solid absorbent capable of (1) forming a solid absorbent using a generally available porous material and (2) achieving both the carbon dioxide recovery amount per unit weight of the solid absorbent and the carbon dioxide absorption-desorption efficiency per 1 mole of amine at a high level, to achieve social implementation and large-scale spread of a solid absorbent system corresponding to a gas composition containing low-partial-pressure and/or low-concentration carbon dioxide. According to the present invention, there is provided a means by which carbon dioxide can be efficiently separated or recovered from a gas composition containing low-partial-pressure and/or low-concentration carbon dioxide.

### A. Composition for Carbon Dioxide Separation

A composition for carbon dioxide separation according to the present embodiment contains an oligoamine compound having a boiling point of 200°C or higher, and a modifier having a boiling point of 200°C or higher, wherein some of all nitrogen atoms of the oligoamine compound have a structure of carbamic acid or a salt thereof, and the proportion of nitrogen atoms forming the structure of carbamic acid or a salt thereof in the oligoamine compound is from 0.1% to 20% relative to all the nitrogen atoms of the oligoamine compound. Hereinafter, the structure of carbamic acid or a salt thereof is referred to as a "carbamic acid (salt) structure".

### Oligoamine Compound

The oligoamine compound is a compound having a plurality of amino groups. In the present specification, the oligoamine compound means a polyamine compound having a number average molecular weight of less than 2000. In the composition for carbon dioxide separation according to the present embodiment, the oligoamine compound has a boiling point of 200°C or higher at normal pressure. In the composition for carbon dioxide separation according to the present embodiment, some of all nitrogen atoms (amino groups) of the oligoamine compound have a carbamic acid (salt) structure, and the proportion of the nitrogen atoms forming the structure of carbamic acid or a salt thereof in the oligoamine compound is from 0.1% to 20% relative to all the nitrogen atoms of the oligoamine compound.

Here, the structure of carbamic acid or a salt thereof is a group represented by -N⁺HR¹R²-COOH or -N⁺HR¹R²-COO⁻ (R¹ and R² are each independently a hydrogen atom or a hydrocarbon group optionally having a substituent). R¹ and R² correspond to groups possessed by the amino groups of the oligoamine compound. Thus, R¹ and R² are preferably a hydrogen atom or a hydrocarbon group having from 1 to 20 carbons, and the substituent of R¹ and R² is preferably a primary to tertiary amino group. The structure of carbamic acid or a salt thereof in the oligoamine compound is formed through a reaction with carbon dioxide as represented by Formula (i) or (Formula ii) described below.

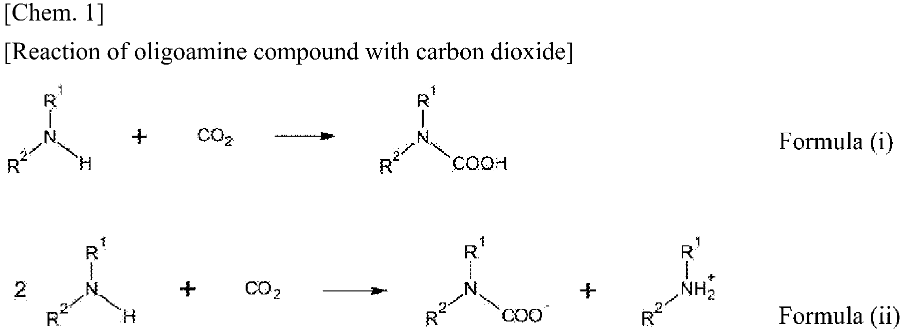

In the composition for carbon dioxide separation according to the present embodiment, some of the amino groups (amine structure) of the oligoamine compound constitute a carbamic acid (salt) structure. In the oligoamine compound, the proportion of the nitrogen atoms forming the carbamic acid (salt) structure is from 0.1% to 20% relative to all the nitrogen atoms of the oligoamine compound. When the proportion of the carbamic acid (salt) structure in the oligoamine compound (proportion of the nitrogen atoms forming the carbamic acid (salt) structure in the oligoamine compound) is less than 0.1%, the hydrophilicity of the oligoamine compound is not sufficient, and when the oligoamine compound is supported on a hydrophilic silica gel to form a solid absorbent for carbon dioxide separation, the impregnation liquid is less likely to permeate into micropores and mesopores. Thus, the composition for carbon dioxide separation is less likely to be retained in micropores and mesopores, leading to deterioration of carbon dioxide absorption-desorption performance. When the proportion of the carbamic acid (salt) structure in the oligoamine compound (proportion of the nitrogen atoms forming the carbamic acid (salt) structure in the oligoamine compound) exceeds 20%, the number of amino groups that effectively act on the absorption and desorption of carbon dioxide decreases, and the carbon dioxide absorption-desorption performance deteriorates. In the oligoamine compound, the proportion of the nitrogen atoms forming the carbamic acid (salt) structure is preferably from 0.2% to 18%, more preferably from 0.3% to 15%, still more preferably from 0.4% to 10%, particularly preferably from 0.5% to 8%, most preferably from 1% to 5%, relative to all the nitrogen atoms of the oligoamine compound. According to one embodiment, the proportion of the nitrogen atoms forming the carbamic acid or a salt structure thereof of the oligoamine compound is from 0.1% to 10%, from 0.1% to 5%, from 0.5% to 10%, from 0.5% to 5%, from 0.8% to 10%, from 0.8% to 5%, from 1% to 10%, from 1% to 4%, or from 1% to 3%, with respect to the total nitrogen atoms of the oligoamine compound.

When the proportion of the carbamic acid (salt) structure in the oligoamine compound (proportion of the nitrogen atoms forming the carbamic acid (salt) structure in the oligoamine compound) is within such a range, the hydrophilicity of the oligoamine compound improves, and the water retaining capacity improves. Thus, when carbon dioxide is separated using the composition for carbon dioxide separation, an increase in the viscosity of the absorption component is suppressed even under a low humidity driving condition, and the carbon dioxide absorption-desorption performance can be maintained. In addition, the affinity of the oligoamine compound with the surface of a hydrophilic silica gel improves, and thus, when the oligoamine compound is supported on the hydrophilic silica gel to form a solid absorbent for carbon dioxide separation, the impregnation liquid easily permeates into micropores and mesopores, and an absorption site in which the composition for carbon dioxide separation is retained in micropores and mesopores can be formed. A method for forming some of the amino groups into an oligoamine compound having a carbamic acid (salt) structure will be described below.

As a method for confirming the formation of the carbamic acid (salt) structure in the oligoamine compound, the oligoamine compound or the composition for carbon dioxide separation may be dissolved in heavy water or the like, and ¹³C-NMR may be measured to confirm the presence of a signal (peak) around 160 ppm. The proportion of the carbamic acid (salt) structure to all the nitrogen atoms of the oligoamine compound can be determined by integrating the peak around 160 ppm and comparing the area with the internal standard or other carbon atoms. The generation of the carbamic acid (salt) structure can also be determined by confirming that a peak derived from the carbamic acid (salt) structure appears in the vicinity of from 1600 cm⁻¹ to 1550 cm⁻¹ by measuring an IR spectrum (Non-Patent Literature 6: Chenhu Sun et al, "Infrared Spectroscopic Study of Reaction of Carbon Dioxide with Aqueous Monoethanolamine Solutions", Industrial & Engineering Chemistry Research 2016, Vol. 55, p. 6276-6283).

In the composition for carbon dioxide separation according to the present embodiment, the oligoamine compound preferably has a low vapor pressure and is less likely to volatilize in the treatment gas. The boiling point of the oligoamine compound is 200°C or higher at normal pressure, preferably 300°C or higher, more preferably 350°C or higher, still more preferably 400°C or higher, particularly preferably 450°C or higher, and most preferably, the oligoamine compound has no boiling point. In practice, when the oligoamine compound has a boiling point, the boiling point of the oligoamine compound is preferably 1000°C or lower at normal pressure. The boiling point of the oligoamine compound can be measured by detecting a differential thermal peak due to evaporation by a differential thermal analysis method.

In the composition for carbon dioxide separation according to the present embodiment, the total amine value of the oligoamine compound is preferably, for example, from 400 KOHmg/g to 1500 KOHmg/g. The total amine value of the oligoamine compound is more preferably from 600 KOHmg/g to 1400 KOHmg/g, still more preferably from 800 KOHmg/g to 1350 KOHmg/g, particularly preferably from 900 KOHmg/g to 1300 KOHmg/g. An oligoamine compound having such an amine value is excellent in reactivity with carbon dioxide, and thus, it is advantageous from the viewpoint of increasing the carbon dioxide absorption-desorption amount in the solid absorbent supporting the composition for carbon dioxide separation. The total amine value is represented by the weight (mg) of potassium hydroxide equivalent to the acid required to neutralize 1 g of a sample, and can be measured, for example, by a method according to ASTM D2074. The carbamic acid (salt) structure of the oligoamine compound desorbs carbon dioxide at the time of measuring the total amine value, and thus, the nitrogen atoms forming the carbamic acid (salt) structure are calculated as amines. Thus, the total amine value of the oligoamine compound is the same as the total amine value of the oligoamine compound having a carbamic acid (salt) structure and the total amine value of the raw material oligoamine compound described below.

In the composition for carbon dioxide separation according to the present embodiment, the oligoamine compound preferably contains a primary amino group (primary amine structure) from the viewpoint of rapidly reacting with carbon dioxide. The proportion of the primary amino group contained in all the amino groups in the oligoamine compound (proportion of the primary amine structure in all the amine structures in the oligoamine compound) is preferably 5% or more, more preferably from 10% to 70%, still more preferably from 12% to 60%, particularly preferably from 15% to 50%, most preferably from 20% to 40%. The proportion of the primary amino group in the oligoamine compound (proportion of the primary amine structure in the oligoamine compound) can be determined by measuring ¹³C-NMR and comparing the areas of carbon atoms adjacent to the amine. Here, the proportion of the primary amino group in the oligoamine compound is the proportion of the primary amino group in the oligoamine compound having a carbamic acid (salt) structure, and is different from the proportion of the primary amino group in a raw material (raw material oligoamine compound) of the oligoamine compound described below.

The number average molecular weight of the oligoamine compound is preferably 200 or more and less than 2000, more preferably from 200 to 1500, still more preferably from 200 to 1000, yet still more preferably from 250 to 900, particularly preferably from 280 to 800, most preferably from 300 to 700. According to one embodiment, the number average molecular weight of the oligoamine compound is from 200 to 800, from 300 to 900, from 300 to 800, or from 200 to 600. The oligoamine compound having such a number average molecular weight is advantageous in that both the vapor pressure and the viscosity can be suppressed to be low, and thus the absorption-desorption amount is increased while suppressing the volatility.

The number average molecular weight of the oligoamine compound can be measured by a boiling point elevation method using an ebulliometer or the like. In the boiling point elevation method, a certain amount of solvent is collected and the boiling point is measured; subsequently, a trace amount of solute is dissolved in the solvent, and the boiling point of the solution is measured and then calculated using the following formula. This makes it possible to determine the molar mass of the solute, and when an oligoamine compound is used as the solute, the molar mass can be used as the number average molecular weight. Examples of the solvent that can be used include methanol, ethanol, 1-propanol, 2-propanol, 1-butanol, 2-butanol, ethylene glycol monomethyl ether, ethylene glycol dimethyl ether, and diethylene glycol dimethyl ether.
· $Δtb = ΔKb \times m$ (Degree of boiling point elevation: Δtb [K], molar boiling point elevation: ΔKb [K], mass molar concentration of solute: m [mol/kg])
· $m = w / M \times 1000 / W$ (Mass molar concentration of solute: m [mol/kg], mass of solute: w [g], molar mass of solute: M [g/mol], mass of solvent: W [g]).

The molecular weight distribution (weight average molecular weight (Mw)/number average molecular weight (Mn)) of the oligoamine compound is, for example, from 1 to 20, preferably from 1 to 15, more preferably from 1 to 10, still more preferably from 1 to 5.

Specific examples of the oligoamine compound include polyethyleneimine, modified polyethyleneimine in which some of primary amino groups of polyethyleneimine are converted into secondary amino groups through introduction of an organic group, diethylenetriamine, modified diethylenetriamine in which some of primary amino groups of diethylenetriamine are converted into secondary amino groups through introduction of an organic group, triethylenetetramine, modified triethylenetetramine in which some of primary amino groups of triethylenetetramine are converted into secondary amino groups through introduction of an organic group, tetraethylenepentamine, modified tetraethylenepentamine in which some of primary amino groups of tetraethylenepentamine are converted into secondary amino groups through introduction of an organic group, pentaethylenehexamine, modified pentaethylenehexamine in which some of primary amino groups of pentaethylenehexamine are converted into secondary amino groups through introduction of an organic group, hexaethyleneheptamine, modified hexaethyleneheptamine in which some of primary amino groups of hexaethyleneheptamine are converted into secondary amino groups through introduction of an organic group, heptaethyleneoctamine, modified heptaethyleneoctamine in which some of primary amino groups of heptaethyleneoctamine are converted into secondary amino groups through introduction of an organic group, tris(2-aminoethyl)amine, modified tris(2-aminoethyl)amine in which some of primary amino groups of tris(2-aminoethyl)amine are converted into secondary amino groups through introduction of an organic group, tetrakis(2-aminoethyl)ethylenediamine, and modified tetrakis(2-aminoethyl)ethylenediamine in which some of primary amino groups of tetrakis(2-aminoethyl)ethylenediamine are converted into secondary amino groups through introduction of an organic group.

Among these, polyethyleneimine, modified polyethyleneimine in which some of primary amino groups of polyethyleneimine are converted into secondary amino groups through introduction of an organic group, modified tetraethylenepentamine in which some of primary amino groups of tetraethylenepentamine are converted into secondary amino groups through introduction of an organic group, pentaethylenehexamine, modified pentaethylenehexamine in which some of primary amino groups of pentaethylenehexamine are converted into secondary amino groups through introduction of an organic group, hexaethyleneheptamine, modified hexaethyleneheptamine in which some of primary amino groups of hexaethyleneheptamine are converted into secondary amino groups through introduction of an organic group, heptaethyleneoctamine, modified heptaethyleneoctamine in which some of primary amino groups of heptaethyleneoctamine are converted into secondary amino groups through introduction of an organic group, modified tris(2-aminoethyl)amine in which some of primary amino groups of tris(2-aminoethyl)amine are converted into secondary amino groups through introduction of an organic group, tetrakis(2-aminoethyl)ethylenediamine, and modified tetrakis(2-aminoethyl)ethylenediamine in which some of primary amino groups of tetrakis(2-aminoethyl)ethylenediamine are converted into secondary amino groups through introduction of an organic group are preferable, because they have low vapor pressure and are less likely to volatilize in the treatment gas.

From the viewpoint of availability and low volatility, the oligoamine compound is most preferably polyethyleneimine. According to one embodiment, the oligoamine compound is a polyethyleneimine having a number average molecular weight of 200 or more and less than 2000 (preferably, from 200 to 1000). According to one embodiment, the composition for carbon dioxide separation according to the present embodiment contains a polyethyleneimine having a boiling point of 200°C or higher and a number average molecular weight of 200 or more and less than 2000 (preferably, from 200 to 1000) and a modifier having a boiling point of 200°C or higher, and some of all nitrogen atoms of the polyethyleneimine have a structure of carbamic acid or a salt thereof.

The oligoamine compound may be a commercially available product. The commercially available oligoamine compound having no carbamic acid (salt) structure may be an oligoamine compound used in the composition for carbon dioxide separation according to the present embodiment by forming a carbamic acid (salt) structure by the method described below. As an example of the oligoamine compound having no carbamic acid (salt) structure, commercially available products of polyethyleneimine include SP-003, SP-006, SP-012, and SP-018 available from NIPPON SHOKUBAI CO., LTD.

One oligoamine compound may be used singly, or two or more oligoamine compounds may be used in combination.

The weight ratio of the oligoamine compound to the modifier described below (weight of oligoamine compound:weight of modifier) is preferably from 10:90 to 95:5, more preferably from 12:88 to 90:10, still more preferably from 15:85 to 85:15, particularly preferably from 20:80 to 82:18, most preferably from 30:70 to 80:20. When the oligoamine compound and the modifier are contained in the ranges described above, the carbon dioxide absorption-desorption amount can be further increased in the solid absorbent supporting the composition for carbon dioxide separation.

The content of the oligoamine compound is preferably from 30 wt.% to 99 wt.%, more preferably from 35 wt.% to 95 wt.%, still more preferably from 40 wt.% to 90 wt.%, relative to the total weight of the nonvolatile content of the composition for carbon dioxide separation. According to one embodiment, the content of the oligoamine compound is from 32 wt.% to 99 wt.%, from 32 wt.% to 98 wt.%, from 32 wt.% to 95 wt.%, from 33 wt.% to 92 wt.%, from 33 wt.% to 90 wt.%, from 35 wt.% to 92 wt.%, from 35 wt.% to 90 wt.%, from 35 wt.% to 85 wt.%, or from 35 wt.% to 80 wt.%, relative to the total weight of the nonvolatile content of the composition for carbon dioxide separation. According to one embodiment, the content of the oligoamine compound is from 20 wt.% to 60 wt.%, from 40 wt.% to 60 wt.%, from 40 wt.% to 80 wt.%, from 50 wt.% to 80 wt.%, or from 60 wt.% to 80 wt.%, relative to the total weight of the nonvolatile content of the composition for carbon dioxide separation. When the oligoamine compound is contained in the ranges described above, the carbon dioxide absorption-desorption amount can be further increased in the solid absorbent supporting the composition for carbon dioxide separation. The nonvolatile content of the composition for carbon dioxide separation is a nonvolatile content when the composition is dried at 120°C for 6 hours.

Here, to form an oligoamine compound in which some of the amino groups have a carbamic acid (salt) structure, the oligoamine compound as a raw material (hereinafter, referred to as raw material oligoamine compound) may be brought into contact with carbon dioxide. The carbon dioxide is not limited to a gas containing 100 vol% of carbon dioxide, but may be any gas containing carbon dioxide. For example, air may be used as the gas containing carbon dioxide.

For example, to form a carbamic acid (salt) structure in the raw material oligoamine compound, the raw material oligoamine compound and carbon dioxide or a gas containing carbon dioxide (e.g., air) may be brought into contact before being supported on a carrier such as a porous material, or the raw material oligoamine compound may be supported on a carrier such as a porous material and then brought into contact with carbon dioxide or a gas containing carbon dioxide (e.g., air). Specifically, carbon dioxide or a gas containing carbon dioxide (e.g., air) may be introduced into the impregnation liquid containing the raw material oligoamine compound and the modifier, or a carrier such as a porous material may be impregnated with the impregnation liquid containing the raw material oligoamine compound and the modifier, and then carbon dioxide or a gas containing carbon dioxide (e.g., air) may be introduced into the carrier supporting the impregnation liquid. The impregnation liquid may be concentrated in the air while a carrier such as a porous material is being impregnated with the impregnation liquid containing the raw material oligoamine compound and the modifier. Examples of the concentration treatment include a method of performing impregnation and support while evaporating water using a rocking mixer or the like.

The raw material oligoamine compound is preferably brought into contact with carbon dioxide or a gas containing carbon dioxide (e.g., air) at preferably from 30 to 100°C, more preferably from 40°C to 98°C, still more preferably from 50°C to 95°C, particularly preferably from 50°C to 90°C, most preferably from 55 to 85°C. The time for bringing the raw material oligoamine compound into contact with carbon dioxide or a gas containing carbon dioxide (e.g., air) is preferably from 0.1 hours to 48 hours, more preferably from 0.2 hours to 24 hours, still more preferably from 0.5 hours to 12 hours, particularly preferably from 1 to 10 hours, most preferably from 2 to 8 hours. According to one embodiment, the time for bringing the raw material oligoamine compound into contact with carbon dioxide or a gas containing carbon dioxide (e.g., air) is from 1 to 8 hours, from 3 to 8 hours, from 4 to 8 hours, or from 2 to 10 hours. According to one embodiment, the raw material oligoamine compound is brought into contact with carbon dioxide or a gas containing carbon dioxide (e.g., air) at 50°C to 95°C (or from 55 to 90°C) for 0.5 to 12 hours (or from 1 to 10 hours).

From the viewpoint of improving the solubility of the carbamic acid (salt) structure, the contact between the raw material oligoamine compound and carbon dioxide or a gas containing carbon dioxide (e.g., air) is preferably performed in the presence of water. Thus, it is preferable to bring the raw material oligoamine compound into contact with carbon dioxide by impregnating a carrier such as a porous material with an impregnation liquid containing the raw material oligoamine compound, the modifier, and water, and introducing carbon dioxide or a gas containing carbon dioxide (e.g., air) into the carrier supporting the impregnation liquid. By introducing carbon dioxide or a gas containing carbon dioxide (e.g., air) into the carrier supporting the impregnation liquid, the carrier supporting the impregnation liquid can be dried, whereby a solid absorbent supporting the composition for carbon dioxide separation can be produced.

As described above, in the oligoamine compound, some of nitrogen atoms form a carbamic acid (salt) structure through contact with carbon dioxide. The raw material of such an oligoamine compound (raw material oligoamine compound) preferably has a total amine value of, for example, from 400 KOHmg/g to 1500 KOHmg/g. The total amine value of the raw material oligoamine compound is more preferably from 600 KOHmg/g to 1400 KOHmg/g, still more preferably from 800 KOHmg/g to 1350 KOHmg/g, particularly preferably from 900 KOHmg/g to 1300 KOHmg/g. When the raw material oligoamine compound has such an amine value, the carbon dioxide absorption-desorption amount can be increased even after formation of the carbamic acid (salt) structure. The total amine value is represented by the weight (mg) of potassium hydroxide equivalent to the acid required to neutralize 1 g of a sample, and can be measured, for example, by a method according to ASTM D2074.

The raw material of the oligoamine compound (raw material oligoamine compound) preferably contains a primary amino group (primary amine structure) from the viewpoint of rapidly reacting with carbon dioxide. The raw material oligoamine compound is a compound having a primary amino group (primary amine structure) of preferably 10% or more and 70% or less, more preferably 20% or more and 60% or less, still more preferably 30% or more and 50% or less of all the amino groups. The proportion of the primary amino group in the raw material oligoamine compound (proportion of the primary amine structure in the oligoamine compound) can be determined by measuring ¹³C-NMR and comparing the areas of carbon atoms adjacent to the amine.

### Modifier

The modifier is preferably a compound capable of dissolving or dispersing the oligoamine compound or the raw material oligoamine compound. Thus, the modifier may be a solvent and is therefore preferably liquid at 25°C. In the composition for carbon dioxide separation according to the present embodiment, the modifier has a boiling point of 200°C or higher at normal pressure. The boiling point of the modifier is preferably 250°C or higher, more preferably 300°C or higher, still more preferably 350°C or higher. The modifier may be a compound having no boiling point. In practice, when the modifier has a boiling point, the boiling point of the modifier is preferably 1000°C or lower at normal pressure. The boiling point of the modifier can be measured by detecting a differential thermal peak due to evaporation by a differential thermal analysis method.

The modifier is a compound that maintains a liquid state in a driving temperature range (from 0°C to 120°C) of the solid absorbent for carbon dioxide separation, and is preferably a compound that has a low vapor pressure (i.e., the boiling point is 200°C or higher) and is hardly volatilized in the treatment gas. When the modifier having such characteristics is used, evaporation of the composition for carbon dioxide separation during driving can be suppressed, which is advantageous for application under wide driving conditions.

As the Hansen solubility parameter (HSP value) of the modifier, for example, preferably ΔD is 12 or more and 22 or less, ΔP is 5 or more and 15 or less, and ΔH is 3 or more and 30 or less; more preferably, ΔD is 14 or more and 20 or less, ΔP is 6 or more and 14 or less, and ΔH is 4 or more and 28 or less; still more preferably, ΔD is 14.5 or more and 19 or less, ΔP is 6.5 or more and 13.5 or less, and ΔH is 5 or more and 25 or less; particularly preferably, ΔD is 15 or more and 18 or less, ΔP is 7 or more and 13 or less, and ΔH is 12 or more and 22 or less. When the HSP value is within the range described above, the oligoamine compound can be effectively dissolved or dispersed. Specific examples of the HSP value include triethanolamine (ΔD: 17.3, ΔP: 7.6, ΔH: 21/boiling point 335.4°C), triethylene glycol (ΔD: 16, ΔP: 12.5, ΔH: 18.6/boiling point 285°C)), 1,6-hexanediol (ΔD: 15.7, ΔP: 8.4, ΔH: 17.8/boiling point 250°C), 1,9-nonanediol (ΔD: 15.7, ΔP: 7, ΔH: 15.1/boiling point 288°C), N-methylpyrrolidone (ΔD: 18, ΔP: 12.3, ΔH: 7.2/boiling point 202°C), dimethyl phthalate (ΔD: 18.6, ΔP: 10.8, ΔH: 4.9/boiling point 284°C), catechol (ΔD: 20, ΔP: 11.3, ΔH: 21.8/boiling point 245°C), diethylene glycol butyl methyl ether (ΔD: 15.89, ΔP: 4.75, ΔH: 5.61/boiling point 215°C), tripropylene glycol dimethyl ether (ΔD: 15.83, ΔP: 6.35, ΔH: 4.82/boiling point 215°C), 1,3-dimethyl-2-imidazolidinone (ΔD: 18.01, ΔP: 9.58, ΔH: 8.57/boiling point 225°C), diethylene glycol monobutyl ether (ΔD: 16.29, ΔP: 6.18, ΔH: 10.46/boiling point 230°C), triethylene glycol monomethyl ether (ΔD: 16.52, ΔP: 7.45, ΔH: 11.69/boiling point 249°C), diethylene glycol dibutyl ether (ΔD: 15.85, ΔP: 3.98, ΔH: 4.68/boiling point 256°C), triethylene glycol butyl methyl ether (ΔD: 15.95, ΔP: 4.85, ΔH: 5.89/boiling point 261°C), tetraethylene glycol dimethyl ether (ΔD: 16.08, ΔP: 5.69, ΔH: 6.98/boiling point 275°C), adiponitrile (ΔD: 16.7, ΔP: 15.66, ΔH: 6.72/boiling point 295°C), tetraethylene glycol (ΔD: 16.73, ΔP: 9.02, ΔH: 14.58/boiling point 314°C), tricresyl phosphate (ΔD: 18.96, ΔP: 12.26, ΔH: 4.76/boiling point 410°C), polyethylene glycol monomethyl ether 350 (ΔD: 15.97, ΔP: 6.46, ΔH: 9.23/boiling point > 350°C), polyethylene glycol monomethyl ether 450 (ΔD: 15.73, ΔP: 6.26, ΔH: 8.84/boiling point > 350°C), polyethylene glycol monomethyl ether 550 (ΔD: 15.46, ΔP: 6.08, ΔH: 8.62/boiling point > 350°C), polyethylene glycol monomethyl ether 750 (ΔD: 15.21, ΔP: 5.95, ΔH: 8.71/boiling point > 350°C), polyethylene glycol 200 (ΔD: 16.73, ΔP: 9.02, ΔH: 14.58/boiling point higher than 300°C and 350°C or lower), polyethylene glycol 300 (ΔD: 16.24, ΔP: 8.15, ΔH: 11.8/boiling point > 350°C), polyethylene glycol 400 (ΔD: 15.73, ΔP: 7.47, ΔH: 9.68/boiling point > 350°C), polyethylene glycol 500 (ΔD: 15.49, ΔP: 7.2, ΔH: 8.9/boiling point > 350°C), polyethylene glycol 600 (ΔD: 15.3, ΔP: 7.01, ΔH: 8.39/boiling point > 350°C), polyethylene glycol 700 (ΔD: 15.16, ΔP: 6.87, ΔH: 8.06/boiling point > 350°C), polyethylene glycol 800 (ΔD: 14.99, ΔP: 6.72, ΔH: 7.78/boiling point > 350°C), polyethylene glycol 1000 (ΔD: 14.85, ΔP: 6.58, ΔH: 7.67/boiling point > 350°C), polyethylene glycol 1200 (ΔD: 14.75, ΔP: 6.47, ΔH: 7.78/boiling point > 350°C), polypropylene glycol 400 (ΔD: 16.4, ΔP: 5.56, ΔH: 7.03/boiling point > 350°C), polypropylene glycol 600 (ΔD: 16.59, ΔP: 5.02, ΔH: 5.54/boiling point > 350°C), polypropylene glycol 800 (ΔD: 16.89, ΔP: 4.53, ΔH: 4.74/boiling point > 350°C), polypropylene glycol 1000 (ΔD: 17.4, ΔP: 3.9, ΔH: 4.21/boiling point > 350°C), and polypropylene glycol 1200 (ΔD: 17.84, ΔP: 3.4, ΔH: 4.03/boiling point > 350°C). The HSP value can be determined by the method described in the following <1> to <3>.

### HSP value calculation method

<1> Hansen, Charles (2007). Hansen Solubility Parameters: A user's handbook, Second Edition. Boca Raton, Fla: CRC Press.
<2> Emmanuel Stefanis and Costas Panayiotou, Int J Thermophys (2008) 29:568-585
<3> HSPiP: Hansen Solubility Parameter in Practice. http://www.hansen-solubility.com/.

Specific examples of the modifier include N-methylpyrrolidone (202°C), diethylene glycol butyl methyl ether (215°C), tripropylene glycol dimethyl ether (215°C), 1,3-dimethyl-2-imidazolidinone (225°C), diethylene glycol monobutyl ether (230°C), catechol (245°C), triethylene glycol monomethyl ether (249°C), 1,6-hexanediol (250°C), diethylene glycol dibutyl ether (256°C), triethylene glycol butyl methyl ether (261°C), tetraethylene glycol dimethyl ether (275°C), triethylene glycol (285°C), dimethyl phthalate (284°C), 1,9-nonanediol (288°C), adiponitrile (295°C), tetraethylene glycol (314°C), triethanolamine (335.4°C), tricresyl phosphate (410°C), polyethylene glycol monomethyl ether 350 (> 350°C), polyethylene glycol monomethyl ether 450 (> 350°C), polyethylene glycol monomethyl ether 550 (> 350°C), polyethylene glycol monomethyl ether 750 (> 350°C), polyethylene glycol 200 (higher than 300°C and 350°C or lower), polyethylene glycol 300 (> 350°C), polyethylene glycol 400 (> 350°C), polyethylene glycol 500 (> 350°C), polyethylene glycol 600 (> 350°C), polyethylene glycol 800 (> 200°C → > 350°C), polyethylene glycol 1000 (boiling point > 350°C), polyethylene glycol 1200 (boiling point > 350°C), polyethylene glycol 2000 (boiling point > 350°C), and polyethylene glycol 3000 (boiling point > 350 °C) (boiling point of each substance is described in ()).

The modifier is preferably one having a polyethylene glycol structure such as triethylene glycol monomethyl ether, triethylene glycol butyl methyl ether, tetraethylene glycol dimethyl ether, triethylene glycol, tetraethylene glycol, polyethylene glycol monomethyl ether (preferably, polyethylene glycol monomethyl ether 350, polyethylene glycol monomethyl ether 450, polyethylene glycol monomethyl ether 550, or polyethylene glycol monomethyl ether 750), or polyethylene glycol (preferably, polyethylene glycol 200, polyethylene glycol 300, polyethylene glycol 400, polyethylene glycol 500, polyethylene glycol 600, or polyethylene glycol 800), more preferably polyethylene glycol monomethyl ether and/or polyethylene glycol, particularly preferably polyethylene glycol monomethyl ether 350, polyethylene glycol monomethyl ether 450, polyethylene glycol monomethyl ether 550, polyethylene glycol monomethyl ether 750, polyethylene glycol 200, polyethylene glycol 300, polyethylene glycol 400, polyethylene glycol 500, polyethylene glycol 600, or polyethylene glycol 800.

According to one embodiment, the modifier is a compound having a polyethylene glycol structure. When the modifier has a polyethylene glycol structure, the carbon dioxide absorption-desorption amount can be further increased in the solid absorbent supporting the composition for carbon dioxide separation. The number average molecular weight of the compound having a polyethylene glycol structure used as the modifier is preferably from 200 to 3000, more preferably from 200 to 2500, still more preferably from 200 to 2000, yet still more preferably from 200 to 1500, particularly preferably from 280 to 1200, most preferably from 300 to 1000. According to one embodiment, the number average molecular weight of the compound having a polyethylene glycol structure used as the modifier is from 200 to 1000, from 300 to 800, from 300 to 700, from 300 to 600, or from 200 to 600. When the number average molecular weight of the compound having a polyethylene glycol structure is within the range described above, the oligoamine compound can be more effectively supported on the carrier, and the carbon dioxide absorption-desorption amount can be further increased in the solid absorbent supporting the composition for carbon dioxide separation.

The number average molecular weight of the compound having a polyethylene glycol structure can be measured by a boiling point elevation method using an ebulliometer or the like. In the boiling point elevation method, a certain amount of solvent is collected and the boiling point is measured; subsequently, a trace amount of solute is dissolved in the solvent, and the boiling point of the solution is measured and then calculated using the following formula. This makes it possible to determine the molar mass of the solute, and when the compound having a polyethylene glycol structure is used as the solute, the molar mass can be used as the number average molecular weight. Examples of the solvent that can be used include methanol, ethanol, 1-propanol, 2-propanol, 1-butanol, 2-butanol, ethylene glycol monomethyl ether, ethylene glycol dimethyl ether, and diethylene glycol dimethyl ether.

According to one embodiment, the composition for carbon dioxide separation according to the present embodiment contains polyethyleneimine as the oligoamine compound and a compound having a polyethylene glycol structure as the modifier. Thus, the oligoamine compound can be more effectively supported on the carrier, and the carbon dioxide absorption-desorption amount can be further increased in the solid absorbent supporting the composition for carbon dioxide separation. According to one embodiment, the composition for carbon dioxide separation according to the present embodiment contains polyethyleneimine having a number average molecular weight of 200 or more and less than 2000 (preferably, from 200 to 1000) as an oligoamine compound, and a compound having a polyethylene glycol structure having a number average molecular weight of 200 or more and 3000 or less (preferably, from 200 to 1000) as a modifier. Thus, the support of the oligoamine compound on the carrier is further improved, and the carbon dioxide absorption-desorption amount can be further increased in the solid absorbent supporting the composition for carbon dioxide separation.

Another specific example of the modifier is an ionic liquid. The ionic liquid is not particularly limited, and may be, for example, a combination of a cation such as imidazolium-based, pyridinium-based, pyrrolidinium-based, piperidinium-based, ammonium-based, or phosphonium-based cation and an anion such as halide ion, tetrafluoroborate, hexafluorophosphate, or bis(trifluoromethylsulfonyl)amide. From the viewpoint of high affinity with the oligoamine compound, a combination of a cation such as a dialkylimidazolium ion, an alkylpyridinium ion, a tetraalkylammonium ion, or a tetraalkylphosphonium ion having a relatively small organic group and having less than 13 carbons and an anion such as a carboxylic acid anion, for example, a lactate ion, a trifluoromethanesulfonate ion, or a methanesulfonate ion is preferable.

One modifier may be used singly, or two or more modifiers may be used in combination.

The content of the modifier is preferably from 1 wt.% to 80 wt.%, more preferably from 5 wt.% to 75 wt.%, still more preferably from 10 wt.% to 70 wt.%, relative to the total weight of the nonvolatile content of the composition for carbon dioxide separation. According to one embodiment, the content of the modifier is from 5 wt.% to 70 wt.%, from 15 wt.% to 70 wt.%, from 15 wt.% to 65 wt.%, from 15 wt.% to 60 wt.%, from 20 wt.% to 70 wt.%, from 20 wt.% to 65 wt.%, or from 20 wt.% to 60 wt.%, relative to the total weight of the nonvolatile content of the composition for carbon dioxide separation. When the modifier is contained in the ranges described above, the carbon dioxide absorption-desorption amount can be further increased in the solid absorbent supporting the composition for carbon dioxide separation. The nonvolatile content of the composition for carbon dioxide separation is a nonvolatile content when the composition is dried at 120°C for 6 hours.

According to one embodiment, the content of the modifier is preferably from 6 wt.% to 70 wt.%, more preferably from 8 wt.% to 65 wt.%, still more preferably from 10 wt.% to 60 wt.%, relative to the total weight of the nonvolatile content of the composition for carbon dioxide separation. According to one embodiment, the content of the modifier is from 20 wt.% to 50 wt.%, from 30 wt.% to 60 wt.%, from 40 wt.% to 60 wt.%, or from 20 wt.% to 40 wt.%, relative to the total weight of the nonvolatile content of the composition for carbon dioxide separation.

### Water

The composition for carbon dioxide separation according to the present embodiment preferably contains water. When the composition for carbon dioxide separation contains water, mixing and/or dissolution of the oligoamine compound and the modifier can be facilitated, and precipitation of carbamic acid (salt) of the oligoamine compound generated when carbon dioxide is absorbed can be suppressed.

The content of water is not limited as long as the carbon dioxide absorption performance is maintained. The content of water contained in the composition for carbon dioxide separation is preferably from 1 wt.% to 30 wt.%, more preferably from 1.5 wt.% to 29 wt.%, still more preferably from 2 wt.% to 28 wt.%, particularly preferably from 2.5 wt.% to 27 wt.%, most preferably from 3 wt.% to 26 wt.%, relative to the total weight of the composition for carbon dioxide separation. According to one embodiment, the content of water contained in the composition for carbon dioxide separation is from 0.1 wt.% to 5 wt.%, from 0.1 wt.% to 10 wt.%, from 1 wt.% to 20 wt.%, from 0.1 wt.% to 25 wt.%, from 0.1 wt.% to 20 wt.%, from 0.1 wt.% to 30 wt.%, from 0.5 wt.% to 10 wt.%, from 0.5 wt.% to 20 wt.%, from 0.5 wt.% to 25 wt.%, from 0.5 wt.% to 20 wt.%, from 0.5 wt.% to 30 wt.%, from 1 wt.% to 20 wt.%, from 1 wt.% to 15 wt.%, from 1 wt.% to 10 wt.%, from 1 wt.% to 5 wt.%, from 5 wt.% to 30 wt.%, from 5 wt.% to 25 wt.%, from 5 wt.% to 20 wt.%, from 5 wt.% to 15 wt.%, from 5 wt.% to 10 wt.%, from 8 wt.% to 30 wt.%, from 8 wt.% to 25 wt.%, from 8 wt.% to 20 wt.%, or from 8 wt.% to 15 wt.%, relative to the total weight of the composition for carbon dioxide separation. When the content of water is within the range described above, mixing and/or dissolution of the oligoamine compound and the modifier can be facilitated, and precipitation of carbamic acid (salt) of the oligoamine compound generated when carbon dioxide is absorbed can be suppressed.

### Solvent Other Than Water

The composition for carbon dioxide separation may further contain a solvent other than water. Effects such as facilitating mixing and/or dissolution of the oligoamine compound and the modifier can be expected. The solvent other than water is a component that is liquid at normal temperature (25°C) and has a molecular weight of less than 500, excluding the oligoamine compound, the modifier, and water. Examples of the solvent other than water include methanol, ethanol, isopropanol, butanol, acetone, methyl ethyl ketone, acetonitrile, N,N-dimethylformamide, dimethyl sulfoxide, ethylene glycol, methyl cellosolve (ethylene glycol monomethyl ether), and tetrahydrofuran. One solvent other than water may be used singly, or two or more solvents other than water may be used in combination. Among these solvents, acetonitrile, N,N-dimethylformamide, dimethyl sulfoxide, or ethylene glycol is preferably used as the solvent other than water, and acetonitrile is more preferably used.

The content of the solvent other than water contained in the composition for carbon dioxide separation is not limited as long as the carbon dioxide absorption performance is maintained, but is preferably from 0.01 wt.% to 20 wt.%, more preferably from 0.01 wt.% to 10 wt.%, still more preferably from 0.01 wt.% to 5 wt.%, relative to the total weight of the composition for carbon dioxide separation. According to one embodiment, the content of the solvent other than water contained in the composition for carbon dioxide separation is from 0.01 wt.% to 3 wt.%, from 0.01 wt.% to 2 wt.%, or from 0.01 wt.% to 1 wt.%, relative to the total weight of the composition for carbon dioxide separation.

### Additional Component

The composition for carbon dioxide separation may further contain a component (optional component) other than the oligoamine compound and the modifier as long as the effects of the present invention can be obtained. Such an optional component and the content proportion thereof can be appropriately selected according to the purpose or the like.

Examples of the optional component selected according to the purpose and the like include a surfactant, an antioxidant, and a crystallization inhibitor.

As the surfactant, a nonionic surfactant, an anionic surfactant, a cationic surfactant, or an amphoteric surfactant can be used. A surfactant having an HLB (hydrophilic-lipophilic balance) of 10 or more can be used, and a surfactant having an HLB of preferably 12 or more, more preferably 15 or more (the upper limit is, for example, 20 or less) can be used.

As the antioxidant, a radical scavenger, a peroxide decomposer, or a metal deactivator can be used. As the radical scavenger, a phenol-based antioxidant or an amine-based antioxidant can be used, and an amine-based antioxidant is preferable. The peroxide decomposer is not particularly limited as long as it can effectively decompose a peroxide, but a sulfur-based antioxidant or a phosphorus-based antioxidant can be used. The metal deactivator is not particularly limited as long as it can effectively chelate and coordinate to a transition metal such as copper, iron, chromium, or nickel, and ethylenediaminetetraacetic acid (EDTA) or the like is effectively used.

Examples of the crystallization inhibitor include water-soluble polymers such as polyvinylpyrrolidone, polyvinyl alcohol, and hydroxyethylcellulose. When a water-soluble polymer is used as the crystallization inhibitor, it is possible to prevent the carbamic acid (salt) generated through the reaction between the oligoamine compound and carbon dioxide from secondarily interacting with the oligoamine compound to form an insoluble salt.

The optional component may be contained within such a range that the performance of the composition for carbon dioxide separation is not impaired, and its content is, for example, preferably from 0.01 wt.% to 30 wt.%, more preferably from 0.1 wt.% to 20 wt.%, still more preferably from 0.5 wt.% to 10 wt.%, relative to the composition for carbon dioxide separation.

One optional component may be used singly, or two or more optional components may be used in combination.

### Preparation Method

The composition for carbon dioxide separation can be prepared by mixing an oligoamine compound (raw material oligoamine compound), a modifier, and an optional component as raw materials under a temperature condition at which a liquid mixture is produced, for example, a temperature condition of from 20°C to 100°C. According to one embodiment, the composition for carbon dioxide separation can be prepared by mixing an oligoamine compound, a modifier, water, and an optional component as raw materials under a temperature condition of from 20°C to 100°C.

In this case, the oligoamine compound having a carbamic acid (salt) structure in advance may be used as a raw material. In the oligoamine compound, some of nitrogen atoms may be converted into a carbamic acid (salt) structure by bringing the raw material oligoamine compound into contact with carbon dioxide during the preparation of the composition for carbon dioxide separation using a raw material not having a carbamic acid (salt) structure, for example, during the preparation of an impregnation liquid containing a raw material oligoamine compound, a modifier, and, as necessary, water, and an optional component. In this case, an impregnation liquid containing a raw material oligoamine compound, a modifier, water, and an optional component may be contained in a hydrophilic silica gel described below, and then brought into contact with carbon dioxide at the time of evaporating the water of the impregnation liquid retained in the pores to convert some of nitrogen atoms into a carbamic acid (salt) structure. The contact conditions between the raw material oligoamine compound and carbon dioxide are as described above.

According to one embodiment, in the composition for carbon dioxide separation, an impregnation liquid containing an oligoamine compound (raw material oligoamine compound), a modifier, water, and an optional component is prepared under a temperature condition of from 20°C to 100°C, the impregnation liquid is supported on a carrier, and the carrier impregnated with the impregnation liquid is dried to prepare a carrier (solid absorbent) supporting the composition for carbon dioxide separation.

### B. Solid Absorbent for Carbon Dioxide Separation

The composition for carbon dioxide separation described in the section A can be applied to a solid absorbent for carbon dioxide separation for separating carbon dioxide from a gas containing carbon dioxide. The composition for carbon dioxide separation according to the present embodiment can be used by being supported on a carrier. That is, according to the present invention, there is also provided a solid absorbent for carbon dioxide separation, in which the composition for carbon dioxide separation according to the present embodiment is supported on a porous material (e.g., hydrophilic silica gel). The solid absorbent for carbon dioxide separation contains a porous material (e.g., hydrophilic silica gel) and the composition for carbon dioxide separation supported on the hydrophilic silica gel.

### Porous Material

The carrier is preferably a porous material. As the porous material, a silica gel (hydrophilic silica gel and hydrophobic silica gel) is preferable, and a hydrophilic silica gel is more preferable. As the hydrophilic silica gel, any hydrophilic silica gel can be used. A hydrophilic silica gel has pores classified into micropores, mesopores, and macropores. The inner surface of a hydrophilic silica gel can effectively retain the composition for carbon dioxide separation according to the present embodiment and water. Further, from the viewpoint of versatility, it is preferable to use a hydrophilic silica gel produced by a gel method. A hydrophilic silica gel is generally obtained by drying and pulverizing a silica gel synthesized using sodium silicate and a mineral acid as raw materials. For example, commercially available products such as MIZUKASIL (trade name) available from Mizusawa Industrial Chemicals, Ltd. and SYLYSIA (trade name) available from Fuji Silysia Chemical Ltd. can be used. The hydrophilic silica gel can be molded into a desired shape using a binder or the like and used.

The pore volume of the porous material (e.g., hydrophilic silica gel) is preferably from 0.6 cm³/g to 3.0 cm³/g, more preferably from 0.7 cm³/g to 2.5 cm³/g, still more preferably from 0.8 cm³/g to 2.0 cm³/g, particularly preferably from 0.9 cm³/g to 2.0 cm³/g, most preferably from 1.0 cm³/g to 1.8 cm³/g.

When the pore volume of the porous material (e.g., hydrophilic silica gel) is within the range described above, the composition for carbon dioxide separation sufficient for exhibiting the performance can be supported, and the mechanical strength of the porous material (e.g., hydrophilic silica gel) can be sufficiently secured.

The average pore size of the porous material (e.g., hydrophilic silica gel) is preferably from 5 nm to 80 nm, more preferably from 10 nm to 60 nm, still more preferably from 12 nm to 55 nm, particularly preferably from 12 nm to 50 nm, most preferably from 15 nm to 40 nm.

The specific surface area of the porous material (e.g., hydrophilic silica gel) is preferably from 70 m²/g to 800 m²/g, more preferably from 80 m²/g to 650 m²/g, still more preferably from 100 m²/g to 500 m²/g, particularly preferably from 100 m²/g to 450 m²/g, most preferably from 100 m²/g to 400 m²/g.

The bulk specific gravity (bulk density) of the porous material (e.g., hydrophilic silica gel) is preferably 0.10 g/cm³ or more and 0.7 g/cm³ or less, more preferably 0.15 g/cm³ or more and 0.6 g/cm³ or less, still more preferably 0.20 g/cm³ or more and 0.5 g/cm³ or less. The inner surface of the pores of the porous material (e.g., hydrophilic silica gel) is preferably hydrophilic. In the present specification, a porous material having a water adsorption amount per unit surface area of 0.00002 g/m² or more as calculated by the following method is defined as a hydrophilic porous material. For example, a silica gel having a water adsorption amount per unit surface area of 0.00002 g/m² or more as calculated by the following method is defined as a hydrophilic silica gel.

### Hydrophilicity Evaluation of Inner Surface of Pore: Measurement of Water Adsorption Amount in Low-Humidity Nitrogen

When the humidity of a supply gas is measured using TG-DTA (TG-DTA8120, 8122 available from Rigaku Corporation), the porous material heated to 130°C and dried is cooled to 40°C under the condition of an absolute humidity of 1 g/kg, and the weight increase thereof is measured.

The weight of the porous material at the time of water adsorption and the weight of the porous material at the time of drying are measured from TG-DTA measurement, and the water adsorption amount per unit surface area is determined from the following formula.

### Hydrophilicity Evaluation of Inner Surface of Pore

Water adsorption amount per unit surface area (g/m²) = ((weight of porous material at the time of water adsorption (mg) - weight of porous material at the time of drying (mg)) ÷ weight of porous material at the time of drying (mg)) ÷ specific surface area of porous material (m²/g).

According to one embodiment, in the solid absorbent for carbon dioxide separation, the physical properties of the hydrophilic silica gel satisfy one or more selected from the group consisting of (i) to (iv) described below;
(i) a pore volume of from 0.6 cm³/g to 3.0 cm³/g;
(ii) an average pore size of from 5 nm to 80 nm;
(iii) a specific surface area of from 70 m²/g to 800 m²/g; and
(iv) a bulk specific gravity of 0.10 g/cm³ or more.

When the hydrophilic silica gel satisfies one or more selected from the group consisting of (i) to (iv), the carbon dioxide absorption-desorption amount can be further increased in the solid absorbent supporting the composition for carbon dioxide separation.

The form of the hydrophilic silica gel can be freely selected according to the absorption-desorption system. A powder form is preferable for use in a fluidized bed, a spherical form is preferable for use in a mobile phase, a pellet form or a ring form is preferable for use in a stationary phase, and a molded body processed into a honeycomb or filter form that enables a low pressure loss is preferable particularly for use in a stationary phase that requires a large air volume.

The supporting amount of the nonvolatile content of the composition for carbon dioxide separation to the porous material (e.g., hydrophilic silica gel) is not limited as long as the effects of the present invention can be obtained, and is, for example, from 20 wt.% to 80 wt.%, preferably from 25 wt.% to 75 wt.%, more preferably from 30 wt.% to 70 wt.%, still more preferably from 35 wt.% to 65 wt.%, particularly preferably from 35 to 60 wt.%, most preferably from 35 to 58 wt.%, relative to the total weight of the nonvolatile content of the solid absorbent for carbon dioxide separation. The supporting amount of the nonvolatile content of the composition for carbon dioxide separation to a hydrophilic silica gel can be calculated by the following method.

### Calculation of Supporting Amount of Nonvolatile Content of Composition for Carbon Dioxide Separation into Porous Material through Thermogravimetric Measurement

To determine the supporting amount of the nonvolatile content of the composition for carbon dioxide separation, TG-DTA (TG-DTA8120, 8122 available from Rigaku Corporation) is used, compressed air is supplied into the TG-DTA oven at 200 ml/mim using a mass flow controller, and thermogravimetric measurement is performed.

Through the thermogravimetric measurement, the weight of the nonvolatile content of the solid absorbent in a state where carbon dioxide and water are completely desorbed is measured at 120°C for 1 hour to determine the weight of the nonvolatile content of the total of the composition for carbon dioxide separation and the porous material, and the weight of the nonvolatile content of the solid absorbent in a state where the organic component is completely oxidatively decomposed is measured at 500°C for 1 hour to determine the weight of the nonvolatile content of the porous material.

Support proportion of nonvolatile content of composition for carbon dioxide separation (parts by weight) = (weight of nonvolatile content of total of composition for carbon dioxide separation and porous material (g) - weight of nonvolatile content of porous material (g)) ÷ weight of nonvolatile content of total of the composition for carbon dioxide separation and porous material (g) × 100.

The content of water in the solid absorbent for carbon dioxide separation is not limited as long as the carbon dioxide absorption performance is maintained. The content of water contained in the solid absorbent for carbon dioxide separation is preferably from 0.1 wt.% to 20 wt.%, more preferably from 0.2 wt.% to 18 wt.%, still more preferably from 0.5 wt.% to 15 wt.%, particularly preferably from 1 wt.% to 12 wt.%, most preferably from 4 wt.% to 12 wt.%, relative to the total weight of the solid absorbent for carbon dioxide separation. According to one embodiment, the content of water contained in the solid absorbent for carbon dioxide separation is from 0.1 wt.% to 5 wt.%, from 0.1 wt.% to 10 wt.%, from 1 wt.% to 10 wt.%, from 1 wt.% to 20 wt.%, from 2 wt.% to 15 wt.%, from 3 wt.% to 15 wt.%, or from 3 wt.% to 12 wt.%, relative to the total weight of the solid absorbent for carbon dioxide separation. When the content of water is within the range described above, mixing and/or dissolution of the oligoamine compound and the modifier can be facilitated, and precipitation of carbamic acid (salt) of the oligoamine compound generated when carbon dioxide is absorbed can be suppressed.

### Method for Driving Solid Absorbent for Carbon Dioxide Separation

The method for absorbing and desorbing carbon dioxide with the solid absorbent for carbon dioxide separation is not particularly limited, and examples thereof include a method using a temperature swing, a method using a pressure swing, a method using vacuum regeneration, a method using steam regeneration, and a method using a combination thereof.

As an example, the solid absorbent for carbon dioxide separation absorbs carbon dioxide by coming into contact with a supply gas containing carbon dioxide at 0°C to 80°C. After the treated gas is discharged, the carbon dioxide diffused is recovered by heating to 60°C to 120°C. By switching the flow paths of the supply gas and the recovery gas, carbon dioxide can be separated and recovered.

As an example, the solid absorbent for carbon dioxide separation is brought into contact with a supply gas containing carbon dioxide under pressure at 0°C to 80°C to absorb the carbon dioxide. After the treated gas is discharged, the carbon dioxide diffused is recovered by heating to 60°C to 120°C. By switching the flow paths of the supply gas and the recovery gas, carbon dioxide can be separated and recovered.

As an example, the solid absorbent for carbon dioxide separation absorbs carbon dioxide by coming into contact with a supply gas containing carbon dioxide at 0°C to 80°C, and recovers the carbon dioxide diffused by reducing the pressure to 1 kPa to 20 kPa at 40°C to 80°C. By switching the flow paths of the supply gas and the recovery gas, carbon dioxide can be separated and recovered.

As an example, the solid absorbent for carbon dioxide separation absorbs carbon dioxide by coming into contact with a supply gas containing carbon dioxide at 0°C to 80°C, and recovers the carbon dioxide diffused by supplying steam at 20 kPa to 100 kPa at 60°C to 100°C. By switching the flow paths of the supply gas and the recovery gas, carbon dioxide can be separated and recovered.

In a carbon dioxide absorption-desorption test of a solid absorbent using air having a carbon dioxide concentration of 300 vol. ppm to 500 vol. ppm (e.g., 400 vol. ppm) and an absolute humidity of 2 g/kg or less (e.g., 1 g/kg or more and 2 g/kg or less), the solid absorbent for carbon dioxide separation has a carbon dioxide absorption-desorption amount of 0.90 mmol or more (preferably 1.0 mmol or more, more preferably 1.1 mmol or more) per 1 g of the solid absorbent, and a carbon dioxide absorption-desorption amount of 0.20 mol or more (preferably 0.21 mol or more, more preferably 0.22 mol or more) per 1 mol of amine contained in the solid absorbent, as the performance of releasing, at 70°C, carbon dioxide absorbed by the solid absorbent at 40°C.

In a carbon dioxide absorption-desorption test of a solid absorbent using air having a carbon dioxide concentration of 9000 vol. ppm to 11000 vol. ppm (e.g., 10000 vol. ppm) and an absolute humidity of 2 g/kg or less (e.g., 1 g/kg or more and 2 g/kg or less), the solid absorbent for carbon dioxide separation has a carbon dioxide absorption-desorption amount of 1.30 mmol or more (preferably 1.40 mmol or more, more preferably 1.50 mmol or more) per 1 g of the solid absorbent, and a carbon dioxide absorption-desorption amount of 0.20 mol or more (preferably 0.22 mol or more, more preferably 0.24 mol or more) per 1 mol of amine contained in the solid absorbent, as the performance of releasing, at 100°C, carbon dioxide absorbed by the solid absorbent at 70°C. These absorption-desorption tests can be performed by the following method.

### Carbon Dioxide Absorption-Desorption Test Using Carbon Dioxide-Containing Gas Simulating Dry Atmosphere

To measure the carbon dioxide absorption amount and the carbon dioxide desorption amount, TG-DTA (TG-DTA8120, 8122 available from Rigaku Corporation) is used to measure the weight at an absorption temperature (40°C) and a desorption temperature (70°C). A carbon dioxide-containing gas with adjusted flow rates of nitrogen and carbon dioxide is supplied into the TG-DTA oven at 200 ml/mim using a mass flow controller. The carbon dioxide concentration of the simulated gas is about 400 vol. ppm, and the humidity of the supply gas is constant at an absolute humidity of 2 g/kg.

The weight of the solid absorbent at the time of absorbing carbon dioxide and the weight of the solid absorbent at the time of desorbing carbon dioxide by heating are measured from TG-DTA measurement at respective temperatures, and the carbon dioxide absorption-desorption amount and the amine efficiency are determined from the formulae described below.

### Carbon Dioxide Absorption-Desorption Amount

$\begin{matrix}Carbon dioxide absorption - desorption amount \left(mmol/g\right) \\ = \left(\begin{matrix}weight of solid absorbent after carbon dioxide absorption \left(g\right) - weight of solid absorbent after \\ carbon dioxide desorption \left(g\right)\end{matrix}\right) \div molecular weight of carbon dioxide \left(g/mmol\right) \div weight of solid \\ absorbent \left(g\right)\end{matrix}$

### Amine Efficiency

$\begin{matrix}Amine efficiency \left(mol/mol\right) \\ = carbon dioxide absorption - desorption amount \left(mmol/g\right) / number of moles of amine per 1 gram \\ of solid absorbent \left(mmol/g\right) .\end{matrix}$

### Carbon Dioxide Absorption-Desorption Test Using Carbon Dioxide-Containing Gas Simulating Dry Closed Space

To measure the carbon dioxide absorption amount and the carbon dioxide desorption amount, TG-DTA (TG-DTA8120, 8122 available from Rigaku Corporation) was used to measure the weight at an absorption temperature (70°C) and a desorption temperature (100°C). The supply amounts of nitrogen and carbon dioxide are adjusted using a mass flow controller so that the carbon dioxide concentration is about 10000 vol. ppm, and the nitrogen and carbon dioxide are supplied into the TG-DTA oven at a total flow rate of 200 ml/min. The humidity of the supply gas is constant at an absolute humidity of 2 g/kg.

The weight of the solid absorbent at the time of absorbing carbon dioxide and the weight of the solid absorbent at the time of desorbing carbon dioxide by heating are measured from TG-DTA measurement at respective temperatures, and calculation is performed in the same manner as in the carbon dioxide absorption-desorption test using a carbon dioxide-containing gas simulating a dry atmosphere to determine the carbon dioxide absorption-desorption amount.

According to one embodiment, the solid absorbent for carbon dioxide separation satisfies one or more selected from the group consisting of (i) and (ii) described below:
(i) in a carbon dioxide absorption-desorption test using air having a carbon dioxide concentration of 300 vol. ppm to 500 vol. ppm (e.g., 400 vol. ppm) and an absolute humidity of 2 g/kg or less, in a step of releasing, at 70°C, carbon dioxide absorbed by the solid absorbent at 40°C, the carbon dioxide absorption-desorption amount per 1 gram of the solid absorbent is 0.9 mmol or more, and the carbon dioxide absorption-desorption amount per 1 mole of amine contained in the solid absorbent is 0.2 mol or more;
(ii) in a carbon dioxide absorption-desorption test using air having a carbon dioxide concentration of 9000 vol. ppm to 11000 vol. ppm (e.g., 10000 vol. ppm) and an absolute humidity of 2 g/kg or less, in a step of releasing, at 100°C, carbon dioxide absorbed by the solid absorbent at 70°C, the carbon dioxide absorption-desorption amount per 1 gram of the solid absorbent is 1.3 mmol or more, and the carbon dioxide absorption-desorption amount per 1 mole of amine contained in the solid absorbent is 0.2 mol or more.

When the solid absorbent for carbon dioxide separation satisfies one or more selected from the group consisting of (i) and (ii), the absorption-desorption amount of carbon dioxide can be further increased in the solid absorbent supporting the composition for carbon dioxide separation.

### C. Method for Producing Solid Absorbent for Carbon Dioxide Separation

The solid absorbent for carbon dioxide separation according to the section B can be produced by fixing a composition for carbon dioxide separation in the pores of silica gel through (1) a first step of preparing an impregnation liquid containing an oligoamine compound having a boiling point of 200°C or higher, a modifier having a boiling point of 200°C or higher, and water; (2) a second step of impregnating a hydrophilic silica gel with the impregnation liquid; (3) a third step of separating the hydrophilic silica gel impregnated with the impregnation liquid from an excessive amount of the impregnation liquid; and (4) a fourth step of drying the hydrophilic silica gel impregnated with the impregnation liquid by evaporating water in an atmosphere containing carbon dioxide.

By supporting the composition for carbon dioxide separation on the hydrophilic silica gel by the method as described above, the oligoamine component can be evenly distributed to micropores and mesopores in the pores of the hydrophilic silica gel, and macropores required for gas diffusion can be maintained. Thus, a solid absorbent having a high carbon dioxide absorption-desorption amount per mole of amine can be produced.

As another example of the method for producing a solid absorbent for carbon dioxide separation, a composition for carbon dioxide separation can be formed in pores of the hydrophilic silica gel by preparing a mixture containing an oligoamine compound having a boiling point of 200°C or higher and a modifier having a boiling point of 200°C or higher, then diluting the mixture with water to form an impregnation liquid, supporting the impregnation liquid on a porous material (hydrophilic silica gel) by impregnation, and then evaporating water. As still another example, a carbon dioxide absorbing site can be formed in pores of the hydrophilic silica gel by mixing all the components at once to prepare an impregnation liquid, and impregnating the hydrophilic silica gel with the impregnation liquid, and then evaporating water.

### (1) First step of preparing impregnation liquid containing oligoamine compound having boiling point of 200°C or higher, modifier having boiling point of 200°C or higher, and water

### <Oligoamine Compound, Modifier>

The oligoamine compound (raw material oligoamine compound) and/or the modifier may be selected from those described in <<A. Composition for Carbon Dioxide Separation>>.

### Water

In the step of preparing the impregnation liquid, water is used as a solvent from the viewpoint of viscosity reduction effect and safety. The addition amount of water is preferably from 0.1 to 9 times the total weight of the oligoamine compound and the modifier. The addition amount of water is more preferably from 0.2 times to 7 times, still more preferably from 0.3 times to 5 times, most preferably from 0.4 times to 4 times the total weight of the oligoamine compound and the modifier. When water is used as a solvent at the time of producing the solid absorbent for carbon dioxide separation, the hydrophilicity of the composition for carbon dioxide separation improves, and the composition for carbon dioxide separation can be effectively supported on the micropores and mesopores of the hydrophilic silica gel. In addition, when water is used as a solvent at the time of producing the solid absorbent for carbon dioxide separation, water can be left in the supported composition for carbon dioxide separation, and precipitation of a carbamic acid salt from the oligoamine compound can be suppressed when carbon dioxide is absorbed.

### Solvent Other Than Water

The impregnation liquid may contain a solvent other than water. When a solvent other than water is used, the solubility and viscosity of the composition for carbon dioxide separation can be adjusted.

As the solvent other than water, any solvent miscible with water, the raw material oligoamine compound, and the modifier can be selected, and for example, a solvent other than water that can be contained in the above-described composition for carbon dioxide separation is similarly applied. As the solvent other than water, acetonitrile, ethylene glycol, N,N-dimethylformamide, or dimethyl sulfoxide is preferably used, and acetonitrile is more preferable from the viewpoint of ease of mixing with the oligoamine compound, the modifier, and/or water, and ease of removal in the subsequent step.

Two or more solvents other than water may be used in combination, and the solvents, the oligoamine compound, the modifier, and water may be mixed in any order.

The content of the solvent other than water is preferably from 1 part by weight to 200 parts by weight, more preferably from 10 parts by weight to 100 parts by weight, relative to 100 parts by weight of water.

The oligoamine compound used for preparing the impregnation liquid may contain a carbamic acid (salt) structure. When an oligoamine compound containing no carbamic acid (salt) structure is used as a raw material, the oligoamine compound can be formed into an oligoamine compound having a carbamic acid (salt) structure by the fourth step of (4) described below. Alternatively, when an oligoamine compound containing no carbamic acid (salt) structure is used as a raw material, a carbamic acid (salt) structure may be formed by being brought into contact with a gas containing carbon dioxide in the step of preparing the impregnation liquid.

### (2) Second Step of Impregnating Hydrophilic Silica Gel with Impregnation Liquid

Any means for incorporating the impregnation liquid prepared in the first step of (1) in the pores of the hydrophilic silica gel, for example, known methods such as immersion, impregnation, and liquid passage can be employed.

Specifically, the hydrophilic silica gel may be immersed in the impregnation liquid prepared in the first step of (1), the impregnation liquid may be added dropwise to the hydrophilic silica gel, or the hydrophilic silica gel may be filled in a container such as a column and then immersed in the impregnation liquid by passing the impregnation liquid therethrough.

In this case, it is preferable to employ an immersion method from the viewpoint of convenience of operation and equipment.

Any pressure during the treatment may be selected from normal pressure and reduced pressure. To remove air bubbles in pores of the hydrophilic silica gel and allow the impregnation liquid to efficiently permeate therethrough, it is preferable to perform treatment under reduced pressure. The specific pressure during the treatment is preferably from -0.08 MPaG to -0.004 MPaG, more preferably from -0.07 MPaG to -0.01 MPaG, still more preferably from -0.06 MPaG to -0.02 MPaG. According to one embodiment, the step of impregnating a hydrophilic silica gel with the impregnation liquid includes a step of degassing the pores of the porous material under a reduced pressure from -0.08 MPaG to -0.004 MPaG.

The step of impregnating the hydrophilic silica gel with the impregnation liquid is preferably performed in a temperature range of from 20°C to 90°C. The treatment temperature is more preferably from 30°C to 80°C, still more preferably from 40°C to 70°C.

The oligoamine compound used for preparing the impregnation liquid may contain a carbamic acid (salt) structure. When an oligoamine compound containing no carbamic acid (salt) structure is used as a raw material, the oligoamine compound can be formed into an oligoamine compound having a carbamic acid (salt) structure by the fourth step of (4) described below. Alternatively, when an oligoamine compound containing no carbamic acid (salt) structure is used as a raw material, a carbamic acid (salt) structure may be formed by being brought into contact with a gas containing carbon dioxide in this step.

### (3) Third step of separating hydrophilic silica gel impregnated with impregnation liquid from excessive impregnation liquid

For the separation, any solid-liquid separation method such as filtration, decantation, or centrifugation can be employed. From the viewpoint of simplicity of procedures and the like, separation through filtration is preferable.

### (4) Fourth step of drying hydrophilic silica gel impregnated with impregnation liquid by evaporating water under atmosphere containing carbon dioxide

Any method of drying the water may be employed.

The drying temperature in this case is preferably from 30°C to 100°C, more preferably from 40°C to 98°C, still more preferably from 50°C to 95°C, most preferably from 50°C to 90°C.

The treatment time is preferably from 0.1 hours to 48 hours, more preferably from 0.2 hours to 24 hours, still more preferably from 0.5 hours to 12 hours.

Any pressure during the treatment may be selected from normal pressure and reduced pressure. The treatment is preferably performed at normal pressure to slowly evaporate water while maintaining a state in which the composition is retained in pores while utilizing the interaction between the hydrophilic silica gel and the composition.

When the conditions are within the ranges described above, the composition for carbon dioxide separation can be efficiently supported on the mesopores/micropores while the macropores are dried, and a carbon dioxide absorption site can be efficiently produced (i.e., a carbamic acid (salt) structure is formed).

### Carbon Dioxide

In the step of evaporating water, a portion of the oligoamine compound is converted into a carbamic acid (salt) structure under an atmosphere containing carbon dioxide to effectively permeate the impregnation liquid into micropores/mesopores in the hydrophilic silica gel.

The treatment in the atmosphere containing carbon dioxide can take any method and conditions. For example, the treatment may be performed in a ventilated or sealed space. The treatment time is, for example, preferably from 5 minutes to 900 minutes, more preferably from 10 minutes to 600 minutes, particularly preferably from 15 minutes to 300 minutes.

The concentration of carbon dioxide in the atmosphere containing carbon dioxide is preferably 0.01 vol% or more and 20 vol% or less, more preferably 0.02 vol% or more and 15 vol% or less, still more preferably 0.03 vol% or more and 10 vol% or less, particularly preferably 0.035 vol% or more and 5 vol% or less. When the concentration of carbon dioxide is set within the range described above, a carbamic acid (salt) structure is efficiently produced. When a portion of the oligoamine compound has a carbamic acid (salt) structure, the affinity of the impregnation liquid with the surface of the hydrophilic silica gel is improved. Thus, the impregnation liquid easily permeates into micropores and mesopores of the hydrophilic silica gel, and after evaporation of water, the composition for carbon dioxide separation is retained in the micropores and mesopores to form an absorption site. In the atmosphere containing carbon dioxide, nitrogen, oxygen, argon, or the like may be contained in addition to carbon dioxide.

The operation of forming a portion of the amine structure into a carbamic acid (salt) structure may be performed in combination with the step of preparing the impregnation liquid and the step of impregnating the hydrophilic silica gel with the impregnation liquid, in addition to the step of evaporating moisture.

According to one embodiment, the method for producing a solid absorbent for carbon dioxide separation satisfies one or more selected from the group consisting of (a) to (c) described below;
(a) the second step is performed in a temperature range of from 20°C to 90°C;
(b) the second step includes a step of performing degassing in hydrophilic silica gel pores under a reduced pressure from -0.08 MPaG to -0.004 MPaG;
(c) the fourth step is performed in a temperature range of from 30°C to 100°C using air as an atmosphere containing carbon dioxide.

When the solid absorbent for carbon dioxide separation is produced by a production method satisfying one or more selected from the group consisting of (a) to (c) described above, the carbon dioxide absorption-desorption amount can be further increased in the solid absorbent supporting the composition for carbon dioxide separation.

### Examples

Hereinafter, the present Embodiment will be specifically described with reference to Examples, but the present Embodiment is not limited to these Examples. Unless otherwise specified, "parts" means "parts by weight", and "%" means "wt.%". Unless otherwise specified, each operation is performed at room temperature (25°C).

The oligoamine compounds used in the following Examples and Comparative Examples are as follows.
· Polyethyleneimine (Mn = 600): "EPOMIN (trade name) SP-006" (35% of primary amino group (primary amine structure) is contained in all amines) available from NIPPON SHOKUBAI CO., LTD.
· Polyethyleneimine (Mn = 300): "EPOMIN (trade name) SP-003" (45% of primary amino group (primary amine structure) is contained in all amines) available from NIPPON SHOKUBAI CO., LTD.

The modifiers used in the following Examples and Comparative Examples are as follows.
· PEG200 (Mn = 200): Polyethylene glycol 200 (ΔD: 16.73, ΔP: 9.02, ΔH: 14.58/boiling point higher than 300°C and 350°C or lower) available from FUJIFILM Wako Pure Chemical Corporation
· PEG300 (Mn = 300): Polyethylene glycol 300 (ΔD: 16.24, ΔP: 8.15, ΔH: 11.8/boiling point > 350°C) available from FUJIFILM Wako Pure Chemical Corporation
· PEG400 (Mn = 400): Polyethylene glycol 400 (ΔD: 15.73, ΔP: 7.47, ΔH: 9.68/boiling point > 350°C) available from Tokyo Chemical Industry Co., Ltd.
· MePEG450 (Mn = 450): Polyethylene glycol monomethyl ether 450 (ΔD: 15.73, ΔP: 6.26, ΔH: 8.84/boiling point > 350°C) available from Tokyo Chemical Industry Co., Ltd.

The porous materials used in the following Examples and Comparative Examples are as follows.

As the porous material in Comparative Examples, ordered mesoporous silica precisely synthesized using tetraalkoxysilane and a template compound was used.
· SBA-15 (particle size: 150 µm or less): Mesoporous silica available from Aldrich.

As porous materials in Comparative Examples and Examples, a hydrophilic silica gel obtained by classifying the following commercial products or a hydrophilic silica gel obtained by classifying and crushing the commercial products were used.
· Q-10 (particle size range 75-212 µm): CARiACT (trade name) Q-10 (particle size range 75-500 µm) available from Fuji Silysia Chemical Ltd. was classified and used.
· Q-30CR (particle size 53-212 µm): CARiACT (trade name) Q-30 (particle size range 1.18-2.36 mm) available from Fuji Silysia Chemical Ltd. was crushed, classified, and used.
· Q-50CR (particle size range 53-212 µm): CARiACT (trade name) Q-50 (particle size range 1.18-2.36 mm) available from Fuji Silysia Chemical Ltd. was crushed, classified, and used.

As the porous material in Comparative Examples and Examples, the following commercially available hydrophilic silica gel was used.
· P-78F (average particle size: 18 µm): MIZUKASIL (trade name) P-78F available from Mizusawa Industrial Chemicals, Ltd.
· Q-15 (particle size range 180-500 µm): CARiACT (trade name) Q-15 available from Fuji Silysia Chemical Ltd.
· Q-30 (particle size range 75-500 µm): CARiACT (trade name) Q-30 available from Fuji Silysia Chemical Ltd.

The properties of the porous materials used in Comparative Examples and Examples are shown in Table 1.

**[Table 1]**

| Porous material | Silica type | Pore volume cm³/g | Average pore size nm | Particle size range or average particle size µm | Specific surface area m²/g | Water adsorption amount g/m² | Pore inner surface hydrophilic or hydrophobic | Bulk specific gravity g/cm³ |
|---|---|---|---|---|---|---|---|---|
| SBA-15 | Ordered mesoporous silica | 1.45 | 11 | <150 | 524 | 0.000006 | Hydrophobic | 0.067 |
| Q-10 | Silica gel | 1.0 | 10 | 75-212 | 300 | 0.000041 | Hydrophilic | > 0.3 |
| Q-15 | Silica gel | 1.0 | 15 | 180-500 | 200 | 0.000065 | Hydrophilic | > 0.3 |
| Q-30 | Silica gel | 1.0 | 30 | 75-500 | 100 | 0.000036 | Hydrophilic | > 0.3 |
| Q-30CR | Silica gel | 1.0 | 30 | 53-212 | 100 | 0.000036 | Hydrophilic | > 0.3 |
| Q-50CR | Silica gel | 1.0 | 50 | 53-212 | 80 | 0.000022 | Hydrophilic | > 0.3 |
| P-78F | Silica gel | 1.7 | 17 | 18 | 400 | 0.000031 | Hydrophilic | 0.25 |

For the values in Table 1, catalog values were used, and measurements were performed for unpublished values. The pore volume, average pore size, and specific surface area of Q-10, Q-30CR, and Q-50CR were measured with BELSORP MAX available from MicrotracBEL Corp., and it was confirmed that the pore volume, the average pore size, and the specific surface area were not changed from those of the silica gel before classification or crushing and classification. For P-78F, Q-15, and Q-30, the pore volume, the average pore size, and the specific surface area were catalogue values.

The pore volume, average pore size, and specific surface area of SBA-15 were measured using BELSORP MAX available from MicrotracBEL Corp. The bulk specific gravity of each silica gel was calculated by filling a constant weight of the porous material in a measuring cylinder and measuring the volume according to JIS R 1628-1997. For the particle size range of each silica gel, the mesh size of the sieve used for classification was described. That is, "particle size range 75-212 µm" indicates that the silica gel particles passed through a sieve with a mesh size of 212 µm but did not pass through a sieve with a mesh size of 75 µm. The water adsorption amount of each silica gel was determined according to the method of Evaluation of Hydrophilicity of Inner Surface of Pore: Measurement of Water Adsorption Amount Measured In Low-Humidity Nitrogen described above, and silica gel having a water adsorption amount of 0.00002 g/m² or more was defined as a hydrophilic silica gel.

The blending proportions of the raw material oligoamine compound and the modifier are shown in Table 2 for the blending examples of the impregnation liquid used in Comparative Examples and Examples. Table 2 also shows the total amine value and the primary amino group content rate of the raw material oligoamine compound before forming a carbamic acid (salt) structure.

**[Table 2]**

| Blend of oligoamine compound and modifier in composition for carbon dioxide separation | Raw material oligoamine compound | Parts by weight | Modifier | Parts by weight | Physical properties of raw material oligoamine compound | |
|---|---|---|---|---|---|---|
| | | | | | Total amine value KOHmg/g | Primary amino group content rate % |
| Formulation Example 1 | Polyethyleneimine (Mn 600) | 100 | - | 0 | 1122 | 35 |
| Formulation Example 2 | Polyethyleneimine (Mn 600) | 67 | PEG200 (Mn 200) | 33 | 1122 | 35 |
| Formulation Example 3 (Formulation Example 1) | Polyethyleneimine (Mn 600) | 100 | - | 0 | 1122 | 35 |
| Formulation Example 4 | Polyethyleneimine (Mn 300) | 75 | PEG300 (Mn 300) | 25 | 1178 | 45 |
| Formulation Example 5 | Polyethyleneimine (Mn 300) | 80 | PEG300 (Mn 300) | 20 | 1178 | 45 |
| Formulation Example 6 | Polyethyleneimine (Mn 600) | 50 | MePEG450 (Mn 450) | 50 | 1122 | 35 |
| Formulation Example 7 | Polyethyleneimine (Mn 600) | 44 | MePEG450 (Mn 450) | 55 | 1122 | 35 |
| Formulation Example 8 | Polyethyleneimine (Mn 600) | 40 | PEG400 (Mn 400) | 60 | 1122 | 35 |
| Formulation Example 9 | Polyethyleneimine (Mn 600) | 50 | PEG400 (Mn 400) | 50 | 1122 | 35 |
| Formulation Example 10 | Polyethyleneimine (Mn 600) | 70 | PEG400 (Mn 400) | 30 | 1122 | 35 |

### Production Example 1: Preparation of Solid Absorbent for Carbon Dioxide Separation in Comparative Examples 1 to 5

The oligoamine compound and the modifier were weighed in a glass container in blending proportions described in Table 2 so as to be 1 g in total, 10 g of methanol was added, and then the mixture was stirred and mixed at room temperature for 30 minutes using a magnetic stirrer, to thereby prepare an impregnation liquid of a composition for carbon dioxide separation. To the impregnation liquid, 1 g of the powdery porous material described in Tables 3 and 4 was added, and impregnated with the liquid with stirring for 30 minutes. Subsequently, a solvent removal step (bath temperature 60°C, 50 kPa) with an evaporator was performed, and a drying step was performed at 60°C and 20 Pa under reduced pressure, to thereby produce a solid absorbent for carbon dioxide separation in which the composition for carbon dioxide separation containing the oligoamine compound and the modifier of Formulation Example 1 or 2 was supported on the porous material.

### Production Example 2: Preparation of Solid Absorbent for Carbon Dioxide Separation in Examples 1 to 9

The oligoamine compound and the modifier were weighed in a glass container in blending proportions described in Table 2 so as to be 10 g in total, 10 g of water was added, and then the mixture was stirred and mixed at room temperature for 30 minutes using a magnetic stirrer, to thereby prepare an impregnation liquid of a composition for carbon dioxide separation. To the impregnation liquid, 1 g of the powdery porous material described in Tables 3 and 4 was added and stirred for 5 minutes. Thereafter, the impregnation liquid in which the porous material was immersed was depressurized to 50 kPa at 40°C to remove air bubbles inside the porous material, and the impregnation liquid was allowed to permeate into the pores. Subsequently, the excessive impregnation liquid was removed through suction filtration, and a drying step was performed at 60°C for 6 hours under a carbon dioxide-containing (nitrogen gas containing 400 vol. ppm of carbon dioxide) atmosphere, to thereby produce a solid absorbent for carbon dioxide separation in which the composition for carbon dioxide separation containing the oligoamine compound and the modifier of each of Formulation Examples 3 to 10 was supported on the porous material.

### Production Example 3: Preparation of Solid Absorbent for Carbon Dioxide Separation in Comparative Examples 6 to 8 and 10

The oligoamine compound and the modifier were weighed in a glass container in blending proportions described in Table 2 so as to be 10 g in total, 10 g of water was added, and then the mixture was stirred and mixed at room temperature for 30 minutes using a magnetic stirrer, to thereby prepare an impregnation liquid of a composition for carbon dioxide separation. To the impregnation liquid, 1 g of the powdery porous material described in Tables 3 and 4 was added and stirred for 5 minutes. Subsequently, the resultant product was subjected to a step of removing the excessive impregnation liquid through suction filtration, and was left to stand overnight in air at room temperature, to thereby produce a solid absorbent for carbon dioxide separation in which the composition for carbon dioxide separation containing the oligoamine compound and the modifier of Formulation Example 3 or 10 was supported on the porous material.

### Production Example 4: Preparation of Solid Absorbent for Carbon Dioxide Separation of Comparative Example 9

The oligoamine compound and the modifier were weighed in a glass container in blending proportions described in Table 2 so as to be 10 g in total, 10 g of water was added, and then the mixture was stirred and mixed at room temperature for 30 minutes using a magnetic stirrer, to thereby prepare an impregnation liquid of a composition for carbon dioxide separation. To the impregnation liquid, 1 g of the powdery porous material described in Table 3 and Table 4 was added, shaken through irradiation with ultrasonic waves at 40°C for 30 minutes, and dried at 80°C and 0.1 kPa for 2 hours, to thereby produce a solid absorbent for carbon dioxide separation in which the composition for carbon dioxide separation containing the oligoamine compound and the modifier of Formulation Example 10 was supported on the porous material.

### Inclusion and Content Rate of Carbamic Acid (Salt) Structure in Oligoamine Compound in Composition for Carbon Dioxide Separation

Regarding the production of a carbamic acid (salt) structure in the oligoamine compound, the composition for carbon dioxide separation in the solid absorbent for carbon dioxide separation was dissolved in heavy water, ¹³C-NMR was measured, signals (peaks) derived from the carbamic acid (salt) structure 13C in an amount of from 163 to 166 ppm were integrated to determine an area Ac, signals (peaks) derived from the methylene structure 13C in an amount of from 36 to 58 ppm were integrated to determine the area Am, and the content rate C (%) of the carbamic acid (salt) structure was determined by the following formula. As the factor for correcting the intensities of the signal derived from the carbamic acid (salt) structure 13C and the signal derived from the methylene structure 13C (peak): F, an equimolar area ratio of the signal derived from the carbamic acid (salt) structure and the signal derived from the methylene structure (peak) was actually measured by dissolving monoethanolamine and CO₂ in heavy water (peak), and a value of F = 0.366 was used.$\begin{matrix}Content rate of carbamic acid \left(salt\right) structure : C \left(%\right) \\ = \left(area of carbamic acid \left(salt\right) structure 13C: Ac\right) \div \left(area of methylene structure 13C: Am\right) \div \\ \left(intensity correction factor: F\right) .\end{matrix}$

### Total Amine Value and Primary Amino Group Content Rate in Oligoamine Compound

In the composition for carbon dioxide separation, the total amine value and the primary amino group content rate of the oligoamine compound were calculated and shown in Tables 3 and 4. The carbamic acid (salt) structure of the oligoamine compound desorbs carbon dioxide at the time of measuring the total amine value, and thus, the nitrogen atoms forming the carbamic acid (salt) structure are calculated as amines. Thus, the total amine value of the oligoamine compound is the same value as the total amine value of the raw material oligoamine compound described above.

### Measurement of Water Content in Composition for Carbon Dioxide Separation

The solid absorbent for carbon dioxide separation of each of Examples 1 to 9 was dried at 120°C for 1 hour in a dry nitrogen stream and subjected to differential thermal analysis, to thereby measure the water amount in the composition for carbon dioxide separation contained in the solid absorbent for carbon dioxide separation.

The water amount in the composition for carbon dioxide separation contained in the solid absorbent for carbon dioxide separation of each of Examples 1 to 9 was from 1 wt.% to 30 wt.% relative to the total weight of the composition for carbon dioxide separation. The water amount in each composition for carbon dioxide separation is shown in Tables 3 and 4.

### Measurement of Water Content in Solid Absorbent

For each of the solid absorbents for carbon dioxide separation of Examples 1 to 9, the water amount in the solid absorbent was measured by differential thermal analysis by drying at 120°C for 1 hour in a dry nitrogen stream.

The water amount in the solid absorbent for carbon dioxide separation of each of Examples 1 to 9 was from 4 wt.% to 12 wt.% relative to the total weight of the solid absorbent for carbon dioxide separation. The water amount in each solid absorbent for carbon dioxide separation can be calculated as follows using the water amount of the composition for carbon dioxide separation shown in Tables 3 and 4.

### Moisture Amount Conversion Formula for Solid Absorbent

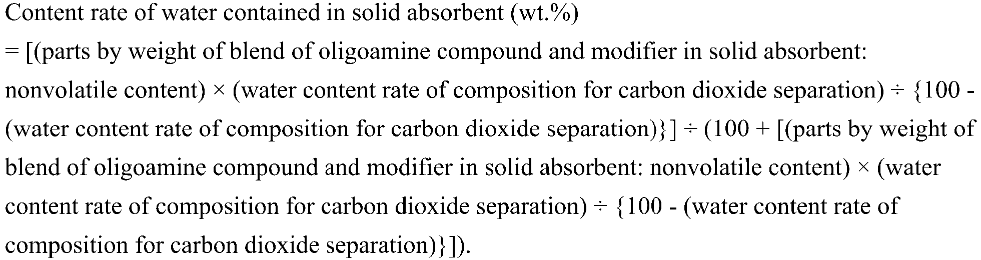

Content rate of water contained in solid absorbent (wt.%) = [(parts by weight of blend of oligoamine compound and modifier in solid absorbent: nonvolatile content) × (water content rate of composition for carbon dioxide separation) ÷ {100 - (water content rate of composition for carbon dioxide separation)}] ÷ (100 + [(parts by weight of blend of oligoamine compound and modifier in solid absorbent: nonvolatile content) × (water content rate of composition for carbon dioxide separation) ÷ {100 - (water content rate of composition for carbon dioxide separation)}]).

### Calculation of Supporting amount of Nonvolatile Content of Composition for Carbon Dioxide Separation in Solid Absorbent for Carbon Dioxide Separation

The supporting amount of the nonvolatile content of the composition for carbon dioxide separation was calculated according to the method in Calculation of Supporting Amount of Nonvolatile Content of Composition for Carbon Dioxide Separation to Hydrophilic Silica Gel by Thermogravimetric Measurement described above. The calculated supporting amount of the nonvolatile content of the composition for carbon dioxide separation in the solid absorbent for carbon dioxide separation is shown in Tables 3 and 4 as the weight ratio between the porous material and the blending example (blend of the oligoamine compound and the modifier).

### Carbon Dioxide Desorption Test

Using the produced solid absorbent for carbon dioxide separation, two carbon dioxide desorption tests were performed according to the methods in Carbon Dioxide Absorption-Desorption Test Using Carbon Dioxide-Containing Gas Simulating Dry Atmosphere and Carbon Dioxide Absorption-Desorption Test Using Carbon Dioxide-Containing Gas Simulating Dry Closed Space described above. The results are shown in Tables 3 and 4.

**[Table 3]**

| Table 3. Carbon dioxide absorption-desorption test using carbon dioxide-containing gas simulating dry atmosphere | | | | | | | | | | | |
|---|---|---|---|---|---|---|---|---|---|---|---|
| Verification of Embodiment | Porous material | Parts by weight | Blend of oligoamine compound and modifier | Parts by weight | Production method | Water amount in composition for carbon dioxide separation wt.% | Oligoamine compound | | | Absorption -desorption amount mmol/g | Amine efficiency mol/mol |
| | | | | | | | Carbamic acid (salt) structure content rate % | Total amine value KOHmg/g | Primary amino group content rate % | | |
| Comparative Example 1 | SBA-15 | 55 | Formulation Example 1 | 45 | Production Example 1 | < 1 | < 0.1 | 1122 | 35 | 0.45 | 0.05 |
| Comparative Example 2 | SBA-15 | 55 | Formulation Example 2 | 45 | Production Example 1 | < 1 | < 0.1 | 1122 | 35 | 0.80 | 0.14 |
| Comparative Example 3 | Q-10 | 60 | Formulation Example 1 | 40 | Production Example 1 | < 1 | < 0.1 | 1122 | 35 | 0.18 | 0.03 |
| Comparative Example 4 | Q-10 | 60 | Formulation Example 2 | 40 | Production Example 1 | < 1 | < 0.1 | 1122 | 35 | 0.14 | 0.02 |
| Comparative Example 5 | Q-30CR | 60 | Formulation Example 2 | 40 | Production Example 1 | < 1 | < 0.1 | 1122 | 35 | 0.31 | 0.06 |
| Comparative Example 6 | Q-10 | 60 | Formulation Example 3 | 40 | Production Example 3 | 37 | 27 | 1122 | 8 | 0.79 | 0.14 |
| Comparative Example 7 | P-78F | 44 | Formulation Example 3 | 56 | Production Example 3 | 31 | 26 | 1122 | 9 | 0.71 | 0.06 |
| Comparative Example 9 | Q-10 | 50 | Formulation Example 10 | 50 | Production Example 4 | < 1 | < 0.1 | 1122 | 35 | 0.25 | 0.03 |
| Example 1 | Q-15 | 62 | Formulation Example 4 | 38 | Production Example 2 | 26 | 9 | 1178 | 36 | 1.49 | 0.26 |
| Example 2 | Q-30 | 62 | Formulation Example 4 | 38 | Production Example 2 | 21 | 9 | 1178 | 36 | 1.20 | 0.21 |
| Example 3 | Q-30 | 60 | Formulation Example 5 | 40 | Production Example 2 | 20 | 10 | 1178 | 35 | 1.59 | 0.25 |
| Example 4 | Q-30CR | 60 | Formulation Example 6 | 40 | Production Example 2 | 20 | 3 | 1122 | 32 | 0.92 | 0.23 |
| Example 5 | Q-50CR | 59 | Formulation Example 7 | 41 | Production Example 2 | 18 | 2 | 1122 | 33 | 0.99 | 0.28 |
| Example 6 | P-78F | 49 | Formulation Example 8 | 51 | Production Example 2 | 8 | 4 | 1122 | 31 | 1.33 | 0.32 |
| Example 7 | P-78F | 43 | Formulation Example 9 | 57 | Production Example 2 | 11 | 6 | 1122 | 29 | 1.18 | 0.21 |
| Example 8 | P-78F | 45 | Formulation Example 10 | 55 | Production Example 2 | 16 | 8 | 1122 | 27 | 1.51 | 0.20 |
| Comparative Example 10 | Q-10 | 50 | Formulation Example 10 | 50 | Production Example 3 | 38 | 24 | 1122 | 11 | 0.45 | 0.05 |

According to the results of Table 3, as shown in Comparative Examples 3 to 5, in the known production method: Production Example 1, even when Formulation Example 2, which is an improved composition for carbon dioxide separation, is supported on a silica gel, the results are inferior to those of Comparative Examples 1 and 2, in which ordered mesoporous silica is used, in terms of the absorption-desorption amount and the amine efficiency. In contrast, by performing the production method according to the present Embodiment: Production Example 2, the absorption-desorption amount and the amine efficiency were improved, and it was possible to exhibit performance comparable to that of Comparative Example 2 (SBA-15: mesoporous silica, reproducibility of Non-Patent Literature 4 was confirmed). As shown in Examples 1 to 8, by using the solid absorbent for carbon dioxide separation on which the composition of the present Embodiment was supported, it was possible to prepare a solid absorbent that achieves a large absorption-desorption amount and a high amine efficiency, which greatly exceed the performance of the solid absorbent of the prior art.

**[Table 4]**

| Table 4. Carbon dioxide absorption-desorption test using carbon dioxide-containing gas simulating dry closed space | | | | | | | | | | | |
|---|---|---|---|---|---|---|---|---|---|---|---|
| Verification of Embodiment | Porous material | Parts by weight | Blend of oligoamine compound and modifier | Parts by weight | Production method | Water amount in composition for carbon dioxide separation | Oligoamine compound | | | Absorption -desorption amount mmol/g | Amine efficiency mol/mol |
| | | | | | | wt.% | Carbamic acid (salt) structure content rate % | Total amine value KOHmg/g | Primary amino group content rate % | | |
| Comparative Example 1 | SBA-15 | 55 | Formulation Example 1 | 45 | Production Example 1 | < 1 | < 0.1 | 1122 | 35 | 0.97 | 0.11 |
| Comparative Example 2 | SBA-15 | 55 | Formulation Example 2 | 45 | Production Example 1 | < 1 | < 0.1 | 1122 | 35 | 1.00 | 0.14 |
| Comparative Example 3 | Q-10 | 60 | Formulation Example 1 | 40 | Production Example 1 | < 1 | < 0.1 | 1122 | 35 | 1.16 | 0.15 |
| Comparative Example 4 | Q-10 | 60 | Formulation Example 2 | 40 | Production Example 1 | < 1 | < 0.1 | 1122 | 35 | 0.99 | 0.17 |
| Comparative Example 5 | Q-30CR | 60 | Formulation Example 2 | 40 | Production Example 1 | < 1 | < 0.1 | 1122 | 35 | 1.17 | 0.19 |
| Comparative Example 8 | Q-10 | 73 | Formulation Example 3 | 27 | Production Example 3 | 34 | 30 | 1122 | 5 | 0.81 | 0.15 |
| Comparative Example 7 | P-78F | 44 | Formulation Example 3 | 56 | Production Example 3 | 31 | 26 | 1122 | 9 | 1.24 | 0.11 |
| Comparative Example 9 | Q-10 | 50 | Formulation Example 10 | 50 | Production Example 4 | < 1 | < 0.1 | 1122 | 35 | 0.29 | 0.03 |
| Example 1 | Q-15 | 62 | Formulation Example 4 | 38 | Production Example 2 | 26 | 9 | 1178 | 36 | 1.65 | 0.29 |
| Example 9 | Q-15 | 59 | Formulation Example 5 | 41 | Production Example 2 | 27 | 10 | 1178 | 35 | 1.79 | 0.27 |
| Example 2 | Q-30 | 62 | Formulation Example 4 | 38 | Production Example 2 | 21 | 9 | 1178 | 36 | 1.49 | 0.26 |
| Example 3 | Q-30 | 60 | Formulation Example 5 | 40 | Production Example 2 | 20 | 102 | 1178 | 35 | 1.79 | 0.28 |
| Example 6 | P-78F | 49 | Formulation Example 8 | 51 | Production Example 2 | 8 | 4 | 1122 | 31 | 1.39 | 0.34 |
| Example 7 | P-78F | 43 | Formulation Example 9 | 57 | Production Example 2 | 11 | 6 | 1122 | 29 | 1.30 | 0.23 |
| Example 8 | P-78F | 45 | Formulation Example 10 | 55 | Production Example 2 | 16 | 8 | 1122 | 27 | 1.61 | 0.21 |
| Comparative Example 10 | Q-10 | 50 | Formulation Example 10 | 50 | Production Example 3 | 38 | 24 | 1122 | 11 | 0.66 | 0.08 |

According to the results of Table 4, as shown in Comparative Examples 3 to 5, in the known production method: Production Example 1, even when Formulation Example 2, which was an improved composition for carbon dioxide separation, was supported on a silica gel, no significant superiority was observed in terms of the absorption-desorption amount and the amine efficiency as compared with Comparative Examples 1 and 2 using ordered mesoporous silica. Even when the production method: Production Example 3 was performed, Comparative Examples 7 and 8 did not show significant superiority in the absorption-desorption amount and the amine efficiency. In contrast, as shown in Examples 1 to 3 and 6 to 9, by using the solid absorbent for carbon dioxide separation on which the composition of the present Embodiment was supported, it was possible to prepare a solid absorbent that achieves a large absorption-desorption amount and a high amine efficiency, which greatly exceed the performance of the solid absorbent of the prior art.

As shown in Tables 3 and 4, the solid absorbents for carbon dioxide separation of Examples show that carbon dioxide can be efficiently separated or recovered from a gas composition containing low-partial-pressure or low-concentration carbon dioxide under temperature and humidity conditions assumed in actual operation.

### Industrial Applicability

The composition for carbon dioxide separation and the solid absorbent for carbon dioxide separation of the present Embodiment can be suitably used for, for example, separation and recovery of carbon dioxide from air (DAC), separation and recovery of carbon dioxide from exhaust gas from power plants, factories, and the like, removal of carbon dioxide in closed spaces such as submarines and spacecraft, and the like.

The present application is based on JP 2023-188170 filed on November 2, 2023, the disclosure content of which is incorporated herein by reference in its entirety.

## Claims

1. A composition for carbon dioxide separation comprising:
an oligoamine compound having a boiling point of 200°C or higher; and
a modifier having a boiling point of 200°C or higher, wherein
some of all nitrogen atoms of the oligoamine compound have a structure of carbamic acid or a salt thereof, and
a proportion of nitrogen atoms forming the structure of carbamic acid or a salt thereof in the oligoamine compound is from 0.1% to 20% relative to all the nitrogen atoms of the oligoamine compound.

2. The composition for carbon dioxide separation according to claim 1, wherein a content of water is from 1 wt.% to 30 wt.% relative to a total weight of the composition for carbon dioxide separation.

3. The composition for carbon dioxide separation according to claim 1 or 2, wherein the oligoamine compound is a polyethyleneimine having a number average molecular weight of 200 or more and less than 2000.

4. The composition for carbon dioxide separation according to claim 1 or 2, wherein the oligoamine compound is a compound in which a content of a primary amine structure is 5% or more in all amine structures.

5. The composition for carbon dioxide separation according to claim 1 or 2, wherein the modifier has an HSP value of ΔD of 12 or more and 22 or less, ΔP of 5 or more and 15 or less, and ΔH of 3 or more and 30 or less.

6. The composition for carbon dioxide separation according to claim 1 or 2, wherein the modifier is a compound having a polyethylene glycol structure.

7. A solid absorbent for carbon dioxide separation comprising the composition for carbon dioxide separation described in claim 1 or 2 supported on a hydrophilic silica gel.

8. The solid absorbent for carbon dioxide separation according to claim 7, wherein physical properties of the hydrophilic silica gel satisfy one or more selected from the group consisting of (i) to (iv) described below:
(i) a pore volume of from 0.6 cm³/g to 3.0 cm³/g;
(ii) an average pore size of from 5 nm to 80 nm;
(iii) a specific surface area of from 70 m²/g to 800 m²/g; and
(iv) a bulk specific gravity of 0.10 g/cm³ or more.

9. The solid absorbent for carbon dioxide separation according to claim 7, wherein the solid absorbent satisfies one or more selected from the group consisting of (i) and (ii) described below:
(i) in a carbon dioxide absorption-desorption test using air having a carbon dioxide concentration of from 300 vol. ppm to 500 vol. ppm and an absolute humidity of 2 g/kg or less, in a step of releasing, at 70°C, carbon dioxide absorbed by the solid absorbent at 40°C, a carbon dioxide absorption-desorption amount per 1 g of the solid absorbent is 0.90 mmol or more, and a carbon dioxide absorption-desorption amount per 1 mol of amine contained in the solid absorbent is 0.20 mol or more; and
(ii) in a carbon dioxide absorption-desorption test using air having a carbon dioxide concentration of from 9000 vol. ppm to 11000 vol. ppm and an absolute humidity of 2 g/kg or less, in a step of releasing, at 100°C, carbon dioxide absorbed by the solid absorbent at 70°C, a carbon dioxide absorption-desorption amount per 1 g of the solid absorbent is 1.30 mmol or more, and a carbon dioxide absorption-desorption amount per 1 mol of amine contained in the solid absorbent is 0.20 mol or more.

10. A method for producing a solid absorbent for carbon dioxide separation, the method comprising:
(1) a first step of preparing an impregnation liquid containing an oligoamine compound having a boiling point of 200°C or higher, a modifier having a boiling point of 200°C or higher, and water;
(2) a second step of impregnating a hydrophilic silica gel with the impregnation liquid;
(3) a third step of separating the hydrophilic silica gel impregnated with the impregnation liquid from an excessive amount of the impregnation liquid; and
(4) a fourth step of drying the hydrophilic silica gel impregnated with the impregnation liquid by evaporating water in an atmosphere containing carbon dioxide.

11. The method for producing a solid absorbent for carbon dioxide separation according to claim 10, wherein the method satisfies one or more selected from the group consisting of (a) to (c) described below:
(a) the second step is performed in a temperature range of from 20°C to 90°C;
(b) the second step includes a step of performing degassing in hydrophilic silica gel pores under a reduced pressure of from -0.08 MPaG to -0.004 MPaG; and
(c) the fourth step is performed in a temperature range of from 30°C to 100°C using air as an atmosphere containing carbon dioxide.
